# EUROPÄISCHE PATENTSCHRIFT

(11) **EP 3 181 407 B1**
(45) Veröffentlichungstag und Bekanntmachung des Hinweises auf die Patenterteilung: **05.12.2018**
(21) Anmeldenummer: 16203826.9
(22) Anmeldetag: 13.12.2016
(51) Int. Cl.: B60R 16/023, H02G 3/08, H01R 9/24, H05K 7/02

(54) **ELEKTRISCHER STROMVERTEILER FÜR EIN FAHRZEUG**
ELECTRIC POWER DISTRIBUTOR FOR A VEHICLE
BOÎTIER D'ALIMENTATION ÉLECTRIQUE POUR UN VÉHICULE

(30) Priorität: 15.12.2015 DE 102015121835; 15.12.2015 DE 102015121834; 15.12.2015 DE 102015121836; 15.12.2015 DE 102015121837; 15.12.2015 DE 102015121838; 25.01.2016 DE 202016100315 U
(43) Veröffentlichungstag der Anmeldung: 21.06.2017
(73) Patentinhaber: Lisa Dräxlmaier GmbH, 84137 Vilsbiburg (DE)
(72) Erfinder: Füssl, Peter, 84137 Vilsbiburg (DE); Ecker, Stefan, 84137 Vilsbiburg (DE); Wegscheider, Klaus, 84095 Furth (DE)

(56) Entgegenhaltungen:
- EP-A1- 2 037 469
- EP-A2- 0 135 910
- DE-A1- 4 319 079
- DE-A1-102005 054 350
- DE-A1-102009 029 166
- DE-A1-102012 214 366
- DE-T2- 69 829 251
- DE-U1- 29 612 042
- US-A1- 2015 316 932

## Beschreibung

### Technisches Gebiet

Die vorliegende Erfindung betrifft einen elektrischen Stromverteiler für ein Fahrzeug, insbesondere Kraft-, Hybrid- oder Elektrofahrzeug. Dieser dient der Stromversorgung von einer Vielzahl von elektrischen Verbrauchern des Fahrzeugs, wobei ein zu verteilender Strom in den Stromverteiler eingespeist, dort geschaltet und von dort verteilt wird.

### Stand der Technik

Aus der Praxis ist bekannt, dass über einen elektrischen Stromverteiler eine Vielzahl von elektrischen Verbrauchern eines Fahrzeugs mit elektrischem Strom versorgt werden können. So ein Stromverteiler kann modular aus einem Basismodul und einer individuellen Anzahl von Universalmodulen aufgebaut sein, um den Stromverteiler an eine bestimmte Fahrzeugkonfiguration individuell anpassen zu können.

Ein solcher modularer Stromverteiler ist beispielsweise aus der DE 10 2009 029 166 A1 bekannt. Bei dem darin beschriebenen Stromverteiler erfolgt mit einer mechanischen Anbindung gleichzeitig eine elektrische Kontaktierung, nämlich Kontaktmesser an dem einen Modul und einer Kontaktmesseraufnahme an dem anderen Modul. Obwohl damit eine zuverlässig gute Stromverteilung im Fahrzeug möglich ist, besteht der Wunsch nach einer konstruktiv noch einfacheren Ausgestaltung.

EP 0 135 910 A2 beschreibt einen zentralen Stromverteiler für die Verdrahtung von Kraftfahrzeugen mit einer isolierenden Trägerplatte zur Aufnahme von mit elektrischen Leitungen verbundenen Steckkontakten von unten, wobei die Trägerplatte aus zwei oder mehreren, nebeneinander angeordneten Teilträgerplatten besteht, und mit von oben in die Trägerplatte einsteckbaren elektrischen Bauteilen. Um einen hohen Vorfertigungsgrad sowie eine verbesserte Endmontage und eine größere Reparaturfreuridlichkeit eines Kabelsatzes in einem Kraftfahrzeug zu schaffen, sind die Teilträgerplatten nach Art eines Puzzles geometrisch unterschiedlich im Umriss ausgebildet.

Des Weiteren ist aus der Praxis bekannt, dass ein solcher Stromverteiler zum Schalten eines von einer Stromversorgungsquelle des Fahrzeugs in das Basismodul eingespeisten und davon zu verteilenden Stroms ein oder mehrere Relais aufweist. Diese sind zentral im Basismodul oder in einem oder mehreren der Universalmodule angeordnet. Häufig sind diese auch eingelötet, was die Fertigung und/oder Montage des Stromverteilers relativ aufwändig gestaltet.

Eine Schaltvorrichtung für einen Stromschienen-basierten Fahrzeugstromverteiler wird in der DE 10 2012 214 366 A1 offenbart. Die Schaltvorrichtung wird bereitgestellt mit einer Leiterplatte und mindestens einem darauf angeordneten Schaltelement, und einem Sicherungsträger zum Aufnehmen von einer Vielzahl von Sicherungen, wobei die Leiterplatte einerseits mit einer Stromschiene des Fahrzeugstromverteilers verbindbar ist und anderseits mit dem Sicherungsträger verbunden ist, und das Schaltelement derart ausgebildet ist, sodass ein elektrischer Strom von der Stromschiene zu dem Sicherungsträger über das mindestens eine Schaltelement fließt.

In EP 2 037 469 A1 wird als Schaltelement ein Leiterplattenrelais beschrieben, mit zumindest zwei Anschlusspins für die Bestromung der Relaisspule und mit zumindest zwei Steckfahnen für die Bestromung eines Laststromkreises.

Weitere Teilaspekte finden sich in Ansätzen im Stand der Technik. So offenbart DE 43 19 079 A1 einen elektrischen Verbinderkasten. Das deutsche Gebrauchsmuster DE 296 12 042 U1 beschreibt einen Steuerbaustein für ein Relais und dessen Anordnung mit einem Relais. Die Übersetzung der europäischen Patentschrift DE 698 29 251 T2 beschreibt ein elektrisches Verteilersystem das für die Verteilung sowohl von elektrischer Leistung bzw. elektrischem Strom als auch von elektrischen Signalen verwendet wird. Weiterhin beschreibt die Offenlegungsschrift DE 10 2005 054 350 A1 eine Stromverteilungsbox, bei der die elektrische Kontaktverbindung zwischen einer Relaisaufnahme und mehreren dieser Relaisaufnahme zugeordneten Sicherungsaufnahmen über eine feste Nebenstromschiene erfolgt.

### Beschreibung der Erfindung

Eine Aufgabe der Erfindung ist es daher, unter Einsatz konstruktiv möglichst einfacher Mittel einen verbesserten Stromverteiler zu schaffen, der sich mit geringen Fertigungs- und/oder Montageaufwand bereitstellen lässt.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Ein erfindungsgemäßer elektrischer Stromverteiler für ein Fahrzeug, insbesondere Kraft-, Hybrid- oder Elektrofahrzeug weist wenigstens ein Basismodul auf, in dem zumindest eine erste Stromschiene aufgenommen, also angeordnet ist. Das Basismodul kann ein im Wesentlichen aus Kunststoff gefertigtes Basismodulgehäuse aufweisen, in dem die erste Stromschiene angeordnet und befestigt ist. Die erste Stromschiene ist zudem mit einer Stromversorgungseinrichtung, wie etwa einer Fahrzeugbatterie, einem Gleichspannungswandler oder ähnlichem des Fahrzeugs elektrisch verbunden oder mit einer der genannten verbindbar, sodass in die erste Stromschiene ein an elektrische Verbraucher des Fahrzeugs zu verteilender Strom eingespeist werden kann. Zudem verfügt der Stromverteiler über wenigstens ein in Nachbarschaft zum Basismodul angeordneten Universalmodul, in dem eine zu der ersten Stromschiene separat ausgebildete, zweite Stromschiene angeordnet ist. Mit dem Universalmodul lässt sich der das Basismodul umfassende Stromverteiler individuell erweitern, zum Beispiel in Abhängigkeit einer Fahrzeugkonfiguration. Erfindungsgemäß kontaktiert ein elektromechanisches Bauelement, wie beispielsweise ein Relais zum Schalten, oder eine Stecksicherung eines in die erste Stromschiene eingespeisten (Last-)Stroms mit einem ersten Lastkontakt die erste Stromschiene und mit einem zweiten Lastkontakt die zweite Stromschiene.

Das heißt, dass das Relais neben dem Schalten des elektrischen (Last-)Stroms, der beispielsweise etwa 20 bis 70A beträgt, auch die Funktion eines Überbrückungselements erfüllt, das die strukturelle bzw. räumliche Trennung der ersten und zweiten Stromschiene überbrückt. Alternativ wird die Funktion des Überbrückungselements von einer Stecksicherung übernommen. Dadurch können sonst vorgesehene, elektrisch leitfähige Messerkontakte und Messerkontaktaufnahmen des Erweiterungsmoduls sowie des Universalmoduls entfallen, was einen konstruktiv besonders einfachen und kostengünstigen Aufbau des Stromverteilers ermöglicht. Da der in das Basismodul eingespeiste Strom sowieso zu schalten wäre, erfüllt das zum Schalten vorgesehene elektromechanische Bauelement diese Funktion der elektrischen Verbindung bzw. Überbrückung einfach mit. Da auch die Leitungen und das Universalmodul zu schützen sind, erfüllt eine zwischen dem Basismodul und dem Universalmodul angeordnete Sicherung diese Funktion einfach mit. Anstatt entweder an dem Basismodul oder dem Universalmodul angeordnet zu sein, ist als Überbrückungselement das Relais oder die Stecksicherung einfach zwischen diesen Modulen angeordnet.

Eine besonders vorteilhafte Weiterbildung der Erfindung sieht vor, dass das Relais ein Steckrelais mit fußförmigen Lastkontakten ist. Wenn eine Stecksicherung eingesetzt wird, so kann diese entsprechend fußförmige Lastkontakte, beispielsweise als Messerkontakte, aufweisen. Damit gestaltet sich die Montage des Stromverteilers besonders einfach, da kein Löten, sondern nur ein Stecken des Relais oder der Stecksicherung erforderlich ist. Die Stecksicherung kann in einer vorteilhaften Variante auch als elektronische Sicherung ausgeführt sein, die neben den Aufgaben einer "normalen" meist als Schmelzsicherung ausgeführten Sicherung auch wie ein Relais ansteuerbar ist und somit über externe Schaltsignale schaltbar.

Um das Relais nicht löten zu müssen, sondern ein einfaches Stecken des Relais zu ermöglichen, ist es vorteilhaft, wenn die erste und/oder die zweite Stromschiene wenigstens ein Lastkontaktelement zur Aufnahme des Lastkontakts des Relais aufweist. Idealerweise weist das Relais zum Beispiel fußförmige, steckbare Lastkontakte auf.

Um die Kontaktierung der ersten und/oder zweiten Stromschiene an die Stromstärke des zu verteilenden Stroms anzupassen, ist es vorteilhaft, wenn das Lastkontaktelement als, vorzugsweise paketierbarer, lamellenförmiger, Steckkontakt ausgebildet ist. Ein solches Lastkontaktelement weist eine gabelförmige Steckkontaktaufnahme auf, in die der Lastkontakt des Relais eingesteckt wird. Je nach zu schaltender Stromstärke weist das Lamellenpaket mehr oder weniger Lamellen auf. Wenn mehrere Universalmodule vorgesehen sind, sind deren zweiten Stromschienen üblicherweise zueinander parallel geschaltet, sodass sich der in die erste Stromschiene eingespeiste Strom auf mehrere zweite Stromschienen verteilt. Dadurch können die Lastkontaktelemente der Universalmodule weniger Lamellen aufweisen als die Lastkontaktelemente des Basismoduls.

Eine Variante eines Stromverteilers für ein Fahrzeug weist wenigstens ein elektromechanisches Bauelement auf, das über wenigstens einen durch ein Fußelement gebildeten Lastkontakt zum Führen eines elektrischen Laststroms verfügt. Der Laststrom kann zum Beispiel etwa 20A bis 70A betragen. Erfindungsgemäß sind ein erster Gegenkontaktelement und ein zweiter Gegenkontaktelement auf voneinander getrennten, also zwei separaten Trägerelementen angeordnet. Dabei kontaktieren der erste Gegenkontaktelement und der zweite Gegenkontaktelement denselben Lastkontakt gleichzeitig steckend. Die die Gegenkontakte und gegebenenfalls auch die Stromversorgungseinrichtung sind dazu eingerichtet, über den ersten Gegenkontaktelement einen Stromabgriff zum Weiterführen des abgegriffenen Laststroms und über den zweiten Gegenkontaktelement einen Spannungsabgriff zum Überprüfen, das heißt Diagnostizieren, eines Zustands, insbesondere Schaltzustands, des Bauelements zu gewährleisten.

Zum Überprüfen des Zustands kann die Stromversorgungseinrichtung zum Messen von beispielsweise der Spannungshöhe der abgegriffenen Spannung eingerichtet sein, wobei ein erster Spannungspegel, zum Beispiel etwa 12V, einem ersten Zustand des Bauelements und ein zweiter Spannungspegel, zum Beispiel etwa 0V, einem zweiten Zustand des Bauelements zugeordnet sind. Der erste Spannungspegel entspricht also beispielsweise einer Bordnetz-Nennspannung des Fahrzeugs. Handelt es sich bei dem Bauelement um einen elektromechanischen Schalter, wie etwa ein Relais, kann bei Auftreten des ersten Spannungspegels darauf geschlossen werden, dass der Schalter geschlossen bzw. durchgeschaltet ist, und bei Auftreten des zweiten Spannungspegels darauf geschlossen werden, dass der Schalter offen bzw. nicht durchgeschaltet ist. Bei der Stromversorgungseinrichtung kann es sich um einen elektrischen Stromverteiler eines Fahrzeugs handeln, der vorzugsweise in einem Stromverteilergehäuse untergebracht und gegebenenfalls modular mit einem Basismodul und einem oder mehreren Universalmodulen ausgeführt ist.

Diese erfindungsgemäße Konfiguration ermöglicht es, den Zustand, zum Beispiel Schaltzustand, des elektromechanischen Bauelements mit zahlenmäßig wenigen Kontaktstellen zuverlässig zu überprüfen. Das dem Überprüfen dienende Diagnosesignal, das die elektrische Spannung enthält, wird direkt von dem Lastkontakt abgegriffen, was ein besonders zuverlässiges und sicheres Diagnosesignal ermöglicht. Dies wird durch einen besonders einfachen konstruktiven Aufbau erreicht, da an einem einzigen Lastkontakt gleichzeitig zwei Abgriffe durch gesteckte Gegenkontakte für unterschiedliche Zwecke erfolgen. Auch die Montage der Stromversorgungseinrichtung gestaltet sich einfach, da der Lastkontakt und die Gegenkontakte jeweils als Steckkontakte ausgeführt sind. Mit Aufstecken des elektromechanischen Bauelements werden zugleich beide Gegenkontakte kontaktiert.

Es hat sich für den erzielbaren Nutzen als besonders vorteilhaft erwiesen, wenn der Lastkontakt ein Lastkontaktfuß eines elektromechanischen Steckrelais, insbesondere eines bistabilen Steckrelais, ist. Denn durch die zuverlässig ausführbare Überprüfung des Schaltzustands des Relais wird ein Einsatz eines insbesondere bistabilen Steckrelais in sicherheitsrelevanten Systemen ermöglicht. Ein steckbares Relais ist als Zukaufteil in verschiedenen Ausführungsvarianten kostengünstig erhältlich und zeichnet sich durch einen einfachen konstruktiven Aufbau aus. Die Montage und Demontage im Wartungsfall gestalten sich ebenfalls einfach. Die Breite eines Lastkontaktfußes beträgt zum Beispiel etwa 6,3mm, sodass daran zwei nebeneinander angeordnete Gegenkontakte gleichzeitig aufgesteckt werden können.

Um die abgegriffene Spannung gleich auswerten zu können, ist das zweite Gegenkontaktelement an einer Leiterplatte angebracht, wobei die Leiterplatte als zweites Trägerelement dient. Die Leiterplatte kann zugleich der Ansteuerung des elektromechanischen Bauelements dienen, sodass Ansteuerung und Diagnose auf einer gemeinsamen Leiterplatte verwirklicht sind. Bei einem Relais als elektromechanisches Bauelement kann der Relaistreiber auf der Leiterplatte angeordnet sein, wobei die Leiterplatte dann über ein oder mehrere Steuerkontaktelemente mit einem oder mehreren Steuerkontakten des Relais verbunden ist. Das heißt, dass die Leiterplatte bei diesem Anwendungsfall mit dem einen Lastkontakt und mit dem oder den Steuerkontakten elektrisch verbunden ist. Da über das zweite Gegenkontaktelement der Leiterplatte nur ein Spannungsabgriff erfolgt, können das Gegenkontaktelement und die Leiterbahnen der Leiterplatte hinsichtlich der Stromtragfähigkeit kleiner dimensioniert sein als das erste Gegenkontaktelement oder das diese tragende erste Trägerelement.

Es hat sich als besonders zweckmäßig erwiesen, wenn auf der Leiterplatte eine Messeinrichtung zum Verarbeiten der abgegriffenen elektrischen Spannung angeordnet ist. Die Messeinrichtung kann als integrierte Schaltung ausgeführt und auf der Leiterplatte angebracht sein. Die Messeinrichtung und der zweite Gegenkontaktelement können über Leiterbahnen miteinander elektrisch verbunden sein. Die Messeinrichtung kann zum Beispiel die Spannungshöhe ermitteln oder das Potential abgreifen und eine Potentialdifferenz gegenüber einem an die Messeinrichtung und/oder Leiterplatte geführten Vergleichspotentials ermitteln.

Zur Verarbeitung der abgegriffenen Spannung als Diagnosesignal ist es vorteilhaft, wenn auf der Leiterplatte eine Auswerteeinrichtung zum Auswerten der verarbeiteten elektrischen Spannung angeordnet ist. Die Auswerteeinrichtung ist zum Beispiel als Logikbaustein ausgeführt und direkt auf der Leiterplatte angeordnet. Die Auswerteeinrichtung kann mit der Messeinrichtung über Leiterbahnen elektrisch verbunden sein. Außerdem kann die Auswerteeinrichtung mit einem Treiber oder einer Treiberschaltung, zum Beispiel einem Relaistreiber, zur Ansteuerung des elektromechanischen Bauelements verbunden sein, sodass bei bestimmten Auswerteergebnissen eine Rückkopplung zur Ansteuerung des elektromechanischen Bauelements möglich ist. Die Messeinrichtung und Auswerteeinrichtung können auch zusammengefasst sein, zum Beispiel in einer anwendungsspezifischen integrierten Schaltung (ASIC) zusammengefasst.

Alternativ dazu, kann die Leiterplatte nur der Verteilung des Diagnosesignals dienen, das dann zum Beispiel in einem Steuergerät des Fahrzeugs weiterverarbeitet wird.

Es hat sich als vorteilhaft erwiesen, wenn die Leiterplatte ferner wenigstens ein Steuerkontaktelement zum Kontaktieren eines Steuerkontakts des Bauelements aufweist. Damit kann das elektromechanische Bauelement beispielsweise zum Schalten in den zu überwachenden Zustand angesteuert werden. Ein über die Leiterplatte zu führender Steuerstrom ist dabei betragsmäßig signifikant niedriger als der Laststrom, sodass die Leiterbahnen der Leiterplatte nur für eine vergleichsweise niedrige Stromtragfähigkeit ausgelegt sind. Zum Beispiel kann ein bistabiles Relais zum Schalten in einen anderen Zustand angesteuert werden, wenn der beim Überprüfen ermittelte Zustand ein unerwünschter Zustand ist.

Um mit der Leiterplatte als zweites Trägerelement auch die Ansteuerung des elektromechanischen Elements zu bewerkstelligen, kann auf der Leiterplatte eine Steuereinrichtung zum Ansteuern des Bauelements für den zu überprüfenden Zustand angeordnet sein. Beispielsweise kann dies ein Treiber oder eine Treiberschaltung sein, insbesondere ein Relaistreiber, der als integrierte Schaltung ausgestaltet ist.

In einer Ausführungsform weist die Leiterplatte für die elektrische Stromverteilung beziehungsweise die Stromversorgungseinrichtung eines Fahrzeugs wenigstens einen Gabelkontakt auf, der über eine gabelförmige Steckkontaktaufnahme zum Einstecken eines Steckkontakts verfügt und die Leiterplatte an wenigstens einer Flachseite elektrisch kontaktiert. Das heißt, dass der Gabelkontakt mit Leiterbahnen der Leiterplatte elektrisch verbunden ist. Erfindungsgemäß ist der Gabelkontakt zumindest abschnittsweise parallel zu der Flachseite der Leiterplatte ausgerichtet und in Nachbarschaft einer Stirnseite und/oder Stirnseitenfläche der Leiterplatte angeordnet, wobei die Steckkontaktaufnahme parallel zur Stirnseite und/oder Stirnseitenfläche geöffnet ist. Das heißt, dass der aufzunehmende Steckkontakt von der Stirnseite her in den Gabelkontakt einsteckbar ist, sodass eine Einsteckrichtung des Steckkontakts im Wesentlichen senkrecht zur Flachseite der Leiterplatte ist.

Mit dieser erfindungsgemäßen Konfiguration ergeben sich gleich mehrere Vorteile für den Einsatz der Leiterplatte in einem elektrischen Stromverteiler für ein Fahrzeug. So ist es unter anderem möglich, die Leiterplatte hochkant, insbesondere senkrecht oder vertikal, also entlang einer Fahrzeughochachse, in einem Stromverteiler(-Gehäuse) zu montieren. Dies lässt eine besonders vorteilhafte Anordnung eines oder mehrerer Relais innerhalb des Stromverteilers zu, nämlich zum Beispiel eine Ansteuerung des Relais mit einem über die Leiterplatte geführten Steuerstrom und eine gleichzeitige Kontaktierung einer oder mehrerer Stromschienen, die separat zu der Leiterplatte ausgebildet sind. Denn durch die geringe Dicke der Leiterplatte (im Vergleich zur Breitenerstreckung der Flachseite) ist es möglich, zueinander eng beabstandete Steuerkontakte durch einen oder mehrere der stirnseitig geöffneten Gabelkontakte der Leiterplatte und neben diesen auch davon eng beabstandete Lastkontakte zum Beispiel durch ein Lastkontaktelement einer oder mehrerer Stromschienen zu kontaktieren. Zudem vereinfacht sich die Montage bzw. Konfektionierung des Stromverteilers, da anstatt von zu lötenden, einfach steckbare Relais verwendet werden können.

Eine besonders vorteilhafte Weiterbildung der Erfindung sieht vor, dass zwei die stirnseitige offene Steckkontaktaufnahme ausbildende Kontaktfedern in einer Richtung parallel zur Längserstreckung der Stirnseite aufeinander zugespannt sind, wodurch sie zwischen sich die Steckkontaktaufnahme ausbilden. Damit lässt sich noch mehr Bauraum in einer Richtung senkrecht zur Flachseite der Leiterplatte einsparen, da das Ausfedern beim Einstecken von zum Beispiel einem Relais in Längserstreckungsrichtung der Leiterplatte und nicht quer dazu erfolgt.

Um den Gabelkontakt besonders gut vor mechanischer Beanspruchung oder einer daraus resultierenden Beschädigung zu schützen, hat es sich als vorteilhaft erwiesen, wenn die Steckkontaktaufnahme hinter der Stirnseite oder im Wesentlichen bündig damit abschließt. In anderen Worten, stehen der Gabelkontakt, seine Kontaktfedern und die Steckaufnahme nicht über die Stirnseite oder Stirnseitenfläche hervor. In der zur Stirnseite parallelen Richtung ist der Gabelkontakt also durch das Substrat der Leiterplatte geschützt.

Um die Steckkontaktaufnahme hinter oder unterhalb der Stirnseite und/oder Stirnseitenfläche abschließen zu lassen, ist es von Vorteil, wenn die Leiterplatte eine sich von der Stirnseite im Wesentlichen senkrecht nach innen erstreckende, vorzugsweise schlitzförmige, Materialaussparung aufweist. In anderen Worten ist die Leiterplatte parallel zu der Steckkontaktaufnahme, das heißt der Einsteckrichtung des Steckkontakts, geschlitzt ausgeführt. Dies ermöglicht gegebenenfalls auch eine Vorzentrierung der Last- oder Steuerkontakte des Relais.

Eine alternative Ausführungsvariante sieht vor, dass die Steckkontaktaufnahme über die Stirnseite hervorsteht. Dies ermöglicht eine einfachere Fertigung, da die Leiterplatte weniger vorbereitet, insbesondere nicht geschlitzt werden muss. Außerdem kann dies vorteilhaft sein, wenn in der Einsteckrichtung ein räumlicher Abstand überbrückt werden muss, was dann durch den überstehenden Gabelkontakt erfolgt.

Für manche Einbausituationen kann es vorteilhaft sein, wenn der Gabelkontakt derart gekröpft ist, dass die Steckkontaktaufnahme von der Flachseite der Leiterplatte beabstandet ist. Insbesondere können hier auch leichter zum Beispiel länglich ausgeformte Kontaktmesser in die Steckkontaktaufnahme eingebracht werden, ohne an die Leiterplatte anzustoßen.

Es hat sich für eine gute Dauerhaltbarkeit der Verbindung zwischen Leiterplatte und Gabelkontakt als vorteilhaft erweisen, wenn der Gabelkontakt eine Mehrzahl von Durchsteckfüßen aufweist, die in oder durch eine Flachseite der Leiterplatte gesteckt sind. Hierfür weist die Leiterplatte Stanzlöcher auf. Die Durchsteckfüße sind idealerweise quer, insbesondere senkrecht zur Steckkontaktaufnahme, das heißt zur Einsteckrichtung des Steckkontakts ausgerichtet. Der Gabelkontakt ist vorzugsweise als Stanz- und/oder Biegeteil ausgeführt, wobei die die Durchsteckfüße damit einstückig ausgebildet sind.

Dabei können die Durchsteckfüße auch aus einem Blechmaterial des Gabelkontakts gestanzt und heraus gebogen sein. Die Durchsteckfüße dienen zumindest zum Teil der elektrischen Kontaktierung der Leiterplatte. Ein anderer Teil davon kann aber auch eine rein mechanische Funktion erfüllen, zum Beispiel als Befestigung. Die Durchsteckfüße können in der Einsteckrichtung voneinander beabstandet sein, um so die beim Einstecken des Steckkontakts auf den Gabelkontakt einwirkenden Kräfte verteilt in das Substrat der Leiterplatte einzuleiten. Zum Beispiel können die Durchsteckfüße paarweise in Einsteckrichtung voneinander beabstandet angeordnet sein.

Zumindest ein Teil der Durchsteckfüße kann mit der Leiterplatte, mit Lötkontakten davon, verlötet sein. Dies erfolgt vorteilhafterweise mittels einer Durchsteckmontage (through-hole technology, THT).

Für eine hohe mechanische Festigkeit, insbesondere im Hinblick auf Steck- und Ziehkräfte beim Einstecken und Entfernen des Steckkontakts, ist es vorteilhaft, wenn die Durchsteckfüße zumindest teilweise in die Leiterplatte eingepresst sind.

Um die Leiterplatte mit dem Gabelkontakt alternativ auch mittels Oberflächenmontage (surface-mounting technology, SMT) fertigen zu können, ist es von Vorteil, wenn der Gabelkontakt wenigstens zwei oder mehr Klemmschenkel aufweist, zwischen denen die Leiterplatte eingeklemmt ist. Vorzugsweise liegen die Klemmschenkel jeweils auf wenigstens einer Lötfläche, zum Beispiel einem Lötpad, der Flachseiten auf und sind damit verlötet. Durch das vorherige Klemmen kann vorteilhafterweise auch ein Aufschwimmen des Gabelkontakts vermieden werden.

Zusätzlich zu den Durchsteckfüßen oder den Klemmschenkeln kann der Gabelkontakt auch einen oder mehrere Abstützfüße aufweisen, die sich senkrecht zu der Steckkontaktaufnahme erstrecken und auf der Stirnseite, insbesondere auf der Stirnseitenfläche, der Leiterplatte aufliegen. Diese Abstützfüße dienen der Aufnahme mechanischer Steckkräfte, die beim Einstecken eines Steckkontakts in Steckkontaktaufnahme in der Einsteckrichtung auftreten können. Es hat sich als zweckmäßig erwiesen, wenn sich der oder die Abstützfüße entlang der Längserstreckung der Stirnseite erstrecken.

Um beispielsweise mehrere Relais gleichzeitig zu kontaktieren, insbesondere anzusteuern, kann eine Mehrzahl von Gabelkontakten an der langen Stirnseite der Leiterplatte angeordnet sein.

Die Erfindung bezieht sich auch auf einen elektrischen Stromverteiler für ein Fahrzeug, mit einer darin hochkant, insbesondere senkrecht oder vertikal, angeordneten Leiterplatte in einer oder mehreren der vorstehend erläuterten Ausführungsvarianten. Der Stromverteiler kann ein Gehäuse aufweisen, in dem die Leiterplatte mit Gabelkontakt(en) hochkant zwischen zwei separat dazu ausgebildeten Stromschienen angeordnet ist.

In einer besonderen Variante weist eine Leiterplatte für einen elektrischen Stromverteiler eines Fahrzeugs eine stirnseitig offene Ausklinkung und wenigstens einen in der Ausklinkung angeordneten, elektrischen Steckkontakt zur Aufnahme eines elektrischen Gegensteckkontakts auf. Unter einer Ausklinkung kann in diesem Zusammenhang eine sich von einer Stirnfläche der Leiterplatte nach innen erstreckende Materialaussparung verstanden werden, die beispielsweise durch Fräsen oder durch ein anderes Trennverfahren ausgebildet wird. Aus einem Trägersubstrat der Leiterplatte ist also Material ausgespart, nämlich so, dass sich eine stirnseitig offene, also im Wesentlichen U-förmige Ausklinkung ergibt. Das heißt, dass der Steckkontakt so angeordnet ist, dass die Leiterplatte von der Stirnseite her kontaktierbar ist. Eine Steckrichtung des Gegensteckkontakts ist also senkrecht zur Stirnfläche der Leiterplatte gerichtet. Vorzugsweise stützt sich der Steckkontakt in Steckrichtung an einer Ausklinkungsfläche ab, die parallel zur Stirnfläche ausgerichtet ist. Zum Aufbringen einer Kontaktkraft auf den Gegenkontakt, die im Wesentlichen senkrecht zur Steckrichtung gerichtet ist, stützt sich der Steckkontakt an wenigstens einer zur Stirnfläche der Leiterplatte im Wesentlichen senkrecht ausgerichteten Ausklinkungsfläche mit wenigstens einem Federarm ab. Je nach benötigter Stromtragfähigkeit kann eine Breite des Steckkontakts in Dickenrichtung der Leiterplatte variiert werden. Je nach Art der Kontaktierung und/oder Befestigung des Steckkontakts an der Leiterplatte, kann die Breite des Steckkontakts in Dickenrichtung der Leiterplatte auch in etwa der Dicke der Leiterplatte entsprechen.

Damit ist es vorteilhafterweise möglich, die Leiterplatte von ihrer Stirnseite her elektrisch zu kontaktieren. Dies kann insbesondere dann vorteilhaft sein, wenn nur wenig Bauraum zur Verfügung steht, sodass eine Kontaktierung der Leiterplatte über eine Flachseite kaum oder gar nicht möglich ist. Die Leiterplatte kann dadurch zum Beispiel auch hochkant oder vertikal in einem elektrischen Stromverteiler eingebaut werden und lässt sich von oben her stirnseitig kontaktieren. Zudem ist der Steckkontakt durch die Integration in die Ausklinkung gut geschützt vor äußeren mechanischen Einflüssen. Insbesondere ist der Steckkontakt beim Transport oder im Umgang damit, zum Beispiel während der Montage, gut geschützt.

Eine besonders vorteilhafte Weiterbildung der Erfindung sieht vor, dass der Steckkontakt U-förmig mit zwei aufeinander zugespannten Federarmen und einem diese verbindenden Basisteil ausgebildet ist. Dabei stützt sich der Basisteil an einer parallel zu der Stirnfläche ausgerichteten Ausklinkungsfläche ab. Dadurch erstreckt sich der Steckkontakt im Prinzip über sämtliche Ausklinkungsflächen der Ausklinkung und ist deshalb besonders robust, da er darin fest gehalten und abgestützt wird.

Für einen einfachen konstruktiven Aufbau ist es vorteilhaft, wenn der wenigstens eine Federarm des Steckkontakts dadurch gebildet ist, dass ein sich zu der Stirnfläche hin erstreckendes Ende des Steckkontakts nach außen gebogen ist und sich an der sich senkrecht zur Stirnfläche erstreckenden Ausklinkungsfläche abstützt. Dadurch ergibt sich ein zum Inneren der Ausklinkung konvex geformter Bogen, über den der Gegenkontakt kontaktierbar ist. Das Biegen lässt sich mit geringem Fertigungsaufwand bewerkstelligen.

Besonders einfach und kostengünstig lässt sich die Leiterplatte bereitstellen, wenn der Steckkontakt als Stanz- und/oder Biegeteil ausgebildet ist. So kann der Steckkontakt einstückig aus einem Blech ausgebildet sein. So können der oder die Federarme einstückig durch einfaches Biegen des Blechmaterials ausgeformt sein. Das Blechmaterial besteht vorzugsweise aus einem elektrisch gut leitfähigen Werkstoff, wie etwa Aluminium, einer Aluminiumlegierung, Kupfer, einer Kupferlegierung oder gegebenenfalls einem Stahl.

Für einen konstruktiv einfachen, aber robusten elektrischen Kontakt zwischen dem Steckkontakt und einer Kontaktfläche oder Lötfläche der Leiterplatte ist es von Vorteil, wenn der Steckkontakt wenigstens einen Kontaktarm aufweist, der sich über die wenigstens eine Ausklinkungsfläche hinweg erstreckt und eine Flachseite der Leiterplatte elektrisch kontaktiert. Der elektrische Kontakt des Steckkontakts mit der Leiterplatte erfolgt also über den wenigstens einen Kontaktarm. Zudem wird der Steckkontakt durch die elektrisch kontaktierende Auflage des Kontaktarms auf der Flachseite und gegebenenfalls Verlötens mit dieser zumindest in einer Richtung senkrecht zur Flachseite fixiert.

Für einen möglichst großflächigen elektrischen Kontakt zwischen der Leiterplatte und dem Steckkontakt, ist es vorteilhaft, wenn die Leiterplatte drei Ausklinkungsflächen aufweist, über die sich je wenigstens ein Kontaktarm hinweg erstreckt. Der Steckkontakt ist also auch U-förmig ausgebildet, wobei sich von jedem der Federarme und vom Basisteil je wenigstens ein Kontaktarm insbesondere senkrecht dazu weg erstreckt. So ist der Steckkontakt auch besonders gut in alle möglichen Bewegungsrichtungen befestigt, da sich der Basisteil in Steckrichtung an einer der Ausklinkungsflächen abstützt und die drei Kontaktarme eine Bewegung in andere Bewegungsrichtungen verhindern.

Für eine besonders einfache Montage kann der wenigstens eine Kontaktarm an der Flachseite der Leiterplatte mittels Oberflächenmontage (surface-mounting technology, SMT) oberflächenmontiert sein. Dabei kann der Kontaktarm direkt auf einer Kontaktfläche, wie etwa einem Lötpad, der Leiterplatte elektrisch kontaktierend aufliegen und an dieser angelötet sein.

Alternativ dazu kann der Steckkontakt zur Durchsteckmontage (through-hole technology, THT) eingerichtet sein. Hierzu verfügt der wenigstens eine Kontaktarm über wenigstens einen Lötpin zur Durchsteckmontage an der Leiterplatte. Der Lötpin lässt sich durch Durchstecklöcher der Leiterplatte hindurch stecken und auf einer Flachseite, die der Flachseite mit dem Kontaktarm gegenüberliegt, mit der Leiterplatte elektrisch kontaktierend verlöten.

Um insbesondere bei einer Durchsteckmontage des Steckkontakts an der Leiterplatte ein unerwünschtes in Kontakt kommen oder schlimmstenfalls Festlöten auf der den Kontaktarm aufweisenden Flachseite zu vermeiden, ist es von Vorteil, wenn die Breite des Steckkontakts in Dickenrichtung der Leiterplatte kleiner ist als eine Dicke der Leiterplatte.

Alternativ oder zusätzlich dazu kann der Steckkontakt auch in die Ausklinkung und/oder in Durchgangslöcher der Leiterplatte eingepresst sein. Dadurch wird der Steckkontakt gegebenenfalls sogar zusätzlich zur Lötverbindung auch kraftschlüssig an der Leiterplatte gehalten.

Die Leiterplatte kann auch eine Mehrzahl, also mindestens zwei, Steckkontakte aufweisen, die jeweils in einer eigenen Ausklinkung aufgenommen sind.

Eine erfindungsgemäße Leiterplatte, die sich insbesondere zum Einsatz in einem elektrischen Stromverteiler eines Fahrzeugs eignet, weist wenigstens einen durch eine Mehrzahl, also mindestens zwei, vorzugsweise aber drei, vier, fünf, sechs, sieben oder mehr, von paketierten, blechförmigen Kontaktlamellen gebildeten, elektrischen Steckkontakt, insbesondere Hochstrom-Steckkontakt, mit einer gabelförmigen Steckkontaktaufnahme auf. Ein solcher Steckkontakt wird beispielsweise unter dem Handelsnamen dlam® von der Anmelderin vertrieben. Die einzelnen Kontaktlamellen des Steckkontakts sind vorzugsweise aus einem Blechmaterial mit guten Federeigenschaften gestanzt und/oder gebogen. Die gabelförmige Steckkontaktaufnahme ist durch zwei zumindest abschnittsweise voneinander beabstandete und aufeinander zugespannte Federarme gebildet, deren Federrichtung im Wesentlichen senkrecht zu einer Dickenrichtung der Leiterplatte ist. Ein solcher Steckkontakt eignet sich hinsichtlich seiner Stromtragfähigkeit für hohe elektrische Ströme von bis zu etwa 150 A.

In einer besonderen Variante verfügt die Leiterplatte über wenigstens einen Steckkontaktträger, der in eine Flachseite der Leiterplatte elektrisch kontaktierend gesteckt ist und den Steckkontakt an einem parallel zu einer Stirnfläche der Leiterplatte ausgerichteten Trägerbereich elektrisch kontaktierend derart trägt, dass die Steckkontaktaufnahme des Steckkontakts hin zu einer Stirnseite der Leiterplatte oder parallel dazu geöffnet ist. Die Steckkontaktaufnahme ist also so ausgerichtet, dass sie zu einer Stirnseite der Leiterplatte hin geöffnet ist und so eine stirnseitige Kontaktierung des Steckkontakts erlaubt. Idealerweise ist der Steckkontakt in Nachbarschaft zur Stirnfläche beziehungsweise Stirnseite angeordnet. Die Kontaktierung zwischen Steckkontaktträger und Leiterplatte und die Kontaktierung zwischen Steckkontaktträger und Steckkontakt sind zueinander um etwa 90° versetzt, also senkrecht zueinander ausgerichtet. Der Steckkontaktträger dient als eine Art Adapter zwischen der Leiterplatte und dem Steckkontakt.

Diese erfindungsgemäße Konfiguration der Leiterplatte bewirkt gleich mehrere Vorteile. So ist es möglich, die Leiterplatte hochkant, insbesondere vertikal, in einem elektrischen Stromverteiler für ein Fahrzeug zu verbauen, ohne einen besonderen Steckkontakt für diesen Anwendungsfall konstruieren zu müssen. Der Steckkontaktträger mit dem senkrecht dazu ausgerichteten Steckkontakt ermöglicht es, dass die Leiterplatte stirnseitig, also von einer Stirnseite der Leiterplatte her durch einen Gegensteckkontakt, kontaktiert wird. Hierzu ist aber kein Biegen des Steckkontakts beziehungsweise seiner Lamellen von seiner Kontaktierung an der Flachseite hin zu der Stirnseite erforderlich, was bei einem Paket mit zwei oder mehr Kontaktlamellen kaum oder gar nicht möglich wäre. Insbesondere bei drei oder mehr Kontaktlamellen lassen sich diese nicht um 90° biegen. Denn eine Kontaktlamelle weist eine Blechstärke von bis zu 2,8 mm auf, so dass ein Winkel von 90° zwischen einer Flachseite und einer Stirnseite beziehungsweise Stirnfläche der Leiterplatte nicht darstellbar ist. Außerdem kann die erfindungsgemäße Leiterplatte zunächst nur mit dem robusten Steckkontaktträger bei einem Leiterplattenzulieferer oder Leiterplattenbestücker versehen werden. Der Steckkontakt kann dann zu einem späteren Zeitpunkt in den Steckkontaktträger eingesetzt werden.

Eine besonders vorteilhafte Weiterbildung der Erfindung sieht vor, dass der Steckkontaktträger eine Mehrzahl von elektrisch leitfähigen Durchsteckkontakten aufweist, die im Wesentlichen senkrecht zu dem an dem Trägerbereich angeordneten Steckkontakt ausgerichtet sind. Die Leiterplatte weist zur Aufnahme der Durchsteckkontakte Kontaktlöcher auf, durch die die Durchsteckkontakte hindurch gesteckt werden und worüber eine elektrische Verbindung zu Leiterbahnen der Leiterplatte hergestellt wird. Dies bietet den Vorteil, dass der Steckkontaktträger mittels Durchsteckmontage (through-hole technology, THT) an der Flachseite der Leiterplatte montierbar ist. Idealerweise wird der Steckkontaktträger bei der Durchsteckmontage mit der Leiterplatte verlötet.

Für einen konstruktiv besonders einfachen Aufbau, eine einfache Fertigung sowie Montage der Leiterplatte und des Steckkontaktträgers hat es sich als vorteilhaft erwiesen, wenn der parallel zur Stirnfläche ausgerichtete Trägerbereich des Steckkontaktträgers einen Schlitz aufweist, durch den der Steckkontakt hindurch gesteckt ist. Der Schlitz kann zum Beispiel beim Stanzen des Steckkontaktträgers mit ausgestanzt werden. Auf diese Weise lässt sich der Steckkontakt in einer Richtung senkrecht zur Steckrichtung des Steckkontaktträgers in den Schlitz einstecken.

Für einen festen Sitz des Steckkontakts und eine einfache Montierbarkeit ist es von Vorteil, wenn der Steckkontakt wenigstens eine nach außen stehende Schulter aufweist, die in einem eingesteckten Zustand an dem Trägerbereich des Steckkontaktträgers damit hinterschneidend anliegt. Die Schulter bildet einen Anschlag beim Einstecken des Steckkontakts in den Schlitz, so dass sich die Montage einfach und nachkontrollierbar gestaltet.

Für eine einfache und kostengünstige Montage des Steckkontakts an dem Steckkontaktträger ist es vorteilhaft, wenn der Steckkontakt in den Trägerbereich des Steckkontaktträgers eingesetzt oder, alternativ dazu, eingepresst ist. Wenn der Steckkontakt zum Beispiel durch Einfädeln und/oder Eindrücken eingesetzt wird, wird für die Montage des Steckkontakts kein aufwändiges Werkzeug benötigt.

Zusätzlich kann der Steckkontakt mit dem Trägerbereich stoffschlüssig verbunden sein, zum Beispiel durch Ultraschallschweißen, Löten oder ähnlichem. Dadurch wird eine noch robustere Befestigung des Steckkontakts an dem Steckkontaktträger erreicht.

Für eine fertigungstechnisch einfache sowie kostengünstige Ausführung des Steckkontaktträgers kann der Steckkontaktträger aus einem Kupfer oder eine Kupferlegierung enthaltenden Blechmaterial gestanzt sein. Dies ermöglicht eine werkzeugtechnisch einfache und schnelle Fertigung bei gleichzeitig hohen Stückzahlen.

Um den an dem Steckkontaktträger montierten Steckkontakt beim Transport oder Betrieb der Leiterplatte vor mechanischen Einflüssen oder Beschädigungen zu schützen, kann die Steckkontaktaufnahme des Steckkontakts unterhalb zu oder bündig mit der Stirnfläche der Leiterplatte abschließen. Das heißt, dass die Steckkontaktaufnahme oder Enden deren Federarme nicht über die Stirnfläche der Leiterplatte hervorstehen.

Für eine zuverlässige, bauraumsparende elektrische Kontaktierung des Steckkontakts hat es sich als vorteilhaft erwiesen, wenn die Leiterplatte eine sich von der Stirnfläche her nach innen erstreckende, also stirnseitige, Ausklinkung aufweist, die im Wesentlichen parallel zur Steckkontaktaufnahme, insbesondere zu deren Federarmen, des Steckkontakts verläuft. Diese Ausklinkung kann beispielsweise durch eine Materialaussparung mittels Stanzens gefertigt sein.

In einer Ausführungsform verfügt ein Stromverteiler über wenigstens ein Relais, vorzugsweise ein Steckrelais, oder eine Stecksicherung. Das Relais weist ein Paar, das heißt zwei, Steuerkontakte zum Führen eines Steuerstroms und ein Paar, das heißt zwei, Lastkontakte zum Führen eines von dem Relais bei dessen Ansteuerung zu schaltenden Laststroms auf. Die Steuerkontakte können im Fahrzeug zum Beispiel zur Kontaktierung der Klemmen 85 und 86 dienen. Die Lastkontakte können im Fahrzeug beispielsweise zur Kontaktierung der Klemmen 30 und 87 dienen. Zudem verfügt die Stromversorgungseinrichtung über wenigstens eine Leiterplatte mit Leiterbahnen, gegebenenfalls elektrischen und/oder elektronischen Bauelementen und wenigstens einem Paar, also zwei, von elektrischen Steuerkontaktelementen zum Kontaktieren der Steuerkontakte des Relais.

So weist die Stromversorgungseinrichtung ein erstes und ein zweites Lastkontaktelement zum Kontaktieren der Lastkontakte des Relais auf, wobei die Lastkontaktelemente, vorzugsweise jeweils an zueinander unterschiedlichen, separat zur Leiterplatte ausgebildeten Laststromleitern angeordnet sind. Die Laststromleiter, bei denen es sich beispielsweise um biegeschlaffe elektrische Leitungen, wie etwa Litzenleitungen, oder Stromschienen handeln kann, sind zum Führen des vom Relais in Reaktion auf den innerhalb der Leiterplatte geführten Steuerstrom geschalteten Laststroms außerhalb der Leiterplatte eingerichtet. Das heißt, dass die Laststromleiter hinsichtlich ihrer Stromtragfähigkeit für den darüber zu leitenden Laststrom dimensioniert sind. Bevorzugt sind zwei Laststromleiter vorgesehen, nämlich einer, der dem Relais vorgeschaltet ist, und einer, der dem Relais nachgeschaltet ist. Beiden ist jedoch gemeinsam, dass sie separat zur Leiterplatte ausgebildet sind.

Die strukturelle sowie funktionelle Trennung der direkten Kontaktierung zur Ansteuerung des Relais und der Kontaktierung zum Laststromtransport des vom Relais zu schaltenden Laststroms ermöglicht es die Vorteile, die eine Leiterplatte bietet, mit den Vorteilen, die ein Laststromleiter bietet, zu vereinen. So lässt sich eine Leiterplatte auf einfache Weise softwaregestützt entflechten und so je nach Bedarf für die Ansteuerung konfigurieren. Dabei muss die Leiterplatte nur steuerstromtragfähig dimensioniert sein, nicht aber laststromtragfähig, da der Laststrom außerhalb der Leiterplatte geführt wird. Die Laststromleiter sind dagegen nur zum Transport des Laststroms zu dimensionieren, so dass diese einfach und robust gestaltet werden können.

Eine besonders vorteilhafte der Erfindung sieht vor, dass wenigstens einer der Laststromleiter eine Stromschiene ist. Eine Stromschiene lässt sich als kostengünstiges Stanz- und/oder Biegeteil aus einem robusten Metallblech, zum Beispiel aus Aluminium oder einer Aluminiumlegierung, fertigen und zeichnet sich durch eine hohe Stromtragfähigkeit auch bei hohen Strömen von 40 A oder mehr bei gleichzeitig hoher mechanischer Festigkeit aus.

Es können auch eine Stromschiene mit einem ersten Lastromkontaktelement und eine biegeschlaffe elektrische Leitung mit einem zweiten Lastkontaktelement miteinander kombiniert werden. Dabei können die Stromschiene zur Zufuhr des Laststroms hin zum Relais und die elektrische Leitung zum Weitertransport des Laststroms vom Relais hin zu einem elektrischen Verbraucher des Fahrzeugs vorgesehen sein. Die elektrische Leitung lässt sich aufgrund der biegeschlaffen Eigenschaften leichter zu den Verbrauchern hin führen als die Stromschiene.

Um die Stromversorgungseinrichtung als modularen Stromverteiler ausgestalten zu können, ist es vorteilhaft, wenn das erste Lastkontaktelement an einer ersten Stromschiene und das zweite Lastkontaktelement an einer zu der ersten separat ausgebildeten, zweiten Stromschiene angeordnet sind. Das heißt, dass dem Relais eine erste Stromschiene vorgeschaltet und eine zweite nachgeschaltet ist. Die erste Stromschiene ist zum Beispiel eine mit Klemme 30 des Fahrzeugs verbundene Versorungsstromschiene und die zweite Stromschiene eine zu den Verbrauchern des Fahrzeugs geschaltete Laststromschiene, auf die das Relais den Strom schaltet.

Idealerweise sind die eine oder die zwei Stromschienen und die Leiterplatte hinsichtlich der äußeren Abmessungen so dimensioniert, dass das Relais alle drei Komponenten direkt, das heißt ohne überbrückende Leitungen kontaktieren kann.

Für eine hohe Modularität der Stromversorgungseinrichtung ist es von Vorteil, wenn die Leiterplatte gemeinsam mit einer der Stromschienen in einem Basismodulgehäuse und die andere der Stromschienen in einem davon getrennt ausgebildeten Universalmodulgehäuse angeordnet sind. Dabei können die Leiterplatte und beiden Stromschienen, also das Basismodulgehäuse und das Universalmodulgehäuse zueinander parallel oder, alternativ dazu, die Leiterplatte sowie eine Stromschiene zueinander parallel und die andere Stromschiene senkrecht dazu angeordnet sein. Idealerweise ist die Leiterplatte zwischen den beiden Stromschienen angeordnet, um eine konstruktiv einfache Kontaktierung der Stromschienen zu ermöglichen.

Für eine direkte Kontaktierung der Laststromleiter durch das Relais ist es vorteilhaft, wenn die Leiterplatte benachbart zu den Steuerkontaktelementen eine Ausklinkung, worunter eine Materialaussparung verstanden werden kann, zum vorzugsweise seitlichen Anordnen der Lastkontakte des Relais und/oder der Lastkontaktelemente der Laststromleiter neben der Leiterplatte aufweist. Je nach Anordnung der Steuerkontaktelemente und Lastkontaktelemente oder konstruktiver Ausgestaltung des Relais können also entweder die Lastkontakte des Relais oder die Lastkontaktelemente oder beide neben der Leiterplatte angeordnet sein. Die Kontakte können auch seitlich an der Leiterplatte vorbeigeführt werden. Das heißt, dass die Leiterplatte an der Stelle, an der das Steuerkontaktelement-Paar angeordnet ist, durch die Ausklinkung geringere äußere Abmessungen aufweist, um beispielsweise die Stromschiene näher an die Steuerkontaktelemente der Leiterplatte hinführen zu können.

Für eine gute Integration in das Fahrzeug ist es von Vorteil, wenn im Bereich der Ausklinkung ein Abstand zwischen den Steuerkontaktelementen, insbesondere einer Steuerkontaktaufnahme, und einer Außenkante der Leiterplatte kleiner ist als ein Abstand zwischen einem der Steuerkontakte und einem der Lastkontakte des Relais. So können die Lastkontakte neben der Leiterplatte angeordnet sein und direkt durch das Relais kontaktiert werden.

Um ein leicht montierbares Steckrelais verwenden zu können ist es vorteilhaft, wenn die Steuerkontaktelemente, vorzugsweise gabelförmige, Steckkontakte sind. So lassen sich die als Kontaktfüße ausgebildeten Steuerkontakte des Relais einfach einstecken und werden durch die gabelförmige Steuerkontaktaufnahme sicher gehalten. Die Steckkontakte lassen sich zum Beispiels mittels Durchsteckmontage (through-hole technology, kurz THT) auf einfache Weise an der Leiterplatte anbringen.

Für eine einfache Montage eines Steckrelais können die Lastkontaktelemente, vorzugsweise paketierbar, als Lammellenkontakt ausgebildete Steckkontakte sein. So lässt sich das Steckrelais einfach in einer gabelförmigen Lastkontaktaufnahme einstecken. Die Ausführung als Lamellenkontakt ermöglicht eine einfache Anpassung an unterschiedliche Laststromstärken. Die Anbringung der Lastkontaktelemente an zum Beispiel einer Stromschiene erfolgt idealerweise durch Aufstecken.

Für ein kostengünstiges Schalten des Laststroms und eine einfache Montage hat es sich als vorteilhaft erwiesen, wenn das Relais ein Steckrelais mit fußförmigen Steuerkontakten und/oder Lastkontakten ist. Gegenüber einem Lötrelais liegt der Vorteil darin, dass die Bestückung der Relais beim Konfektionär eines Leitungssatzes durchgeführt werden kann, da hier nur ein einfacher Steckvorgang durchzuführen ist. Zudem sind Steckrelais während der Produktlebensdauer des Fahrzeugs in einer Werkstatt austauschbar.

Um die Leiterplatte möglichst kostengünstig mit klein dimensionierten Leiterbahnen ausführen zu können, ist es vorteilhaft, wenn der über die Steuerkontakte geführte Steuerstrom betragsmäßig kleiner ist als der über die Lastkontakte geführte Laststrom. So beträgt der Steuerstrom bis etwa 1A während ein Laststrom von etwa 30 A, 40 A oder mehr schaltbar ist.

Für eine möglichst gute Raumausnutzung, die auch die Anordnung von mehreren Universalmodulen um das Basismodul herum ermöglicht, sowie eine einfache Überbrückung durch das Relais können die erste Stromschiene und die zweite Stromschiene im Wesentlichen senkrecht und/oder parallel zueinander angeordnet sein. Vorzugsweise sind eine Längsachse der länglich ausgeformten ersten Stromschiene und eine Längsachse der ebenfalls länglich ausgeformten zweiten Stromschiene senkrecht zueinander ausgerichtet. Auf diese Weise lassen sich entlang einer Längserstreckung der ersten Stromschiene mehrere zweite Stromschienen nebeneinander anordnen, wobei die erste Stromschiene dann für jedes überbrückende Relais ein eigenes Lastkontaktelement aufweist.

Für eine einfache Ansteuerung und gegebenenfalls eine Integration einer Diagnose, etwa in Form einer elektrischen Schaltung oder ähnlichem, des Relais ist es vorteilhaft, wenn zwischen der ersten Stromschiene und der zweiten Stromschiene eine Leiterplatte mit Steuerkontaktelementen zum Kontaktieren von Steuerkontakten des Relais angeordnet ist. Handelsübliche Relais weisen in der Regel neben den Lastkontakten auch Steuerkontakte auf, die in Nachbarschaft dazu, zum Beispiel auch zwischen den Lastkontakten, angeordnet sind.

Um eine möglichst bauraumsparende Ansteuerung des Relais über eine Leiterplatte zu ermöglichen, ist es vorteilhaft, wenn eine Flachseite der Leiterplatte im Wesentlichen senkrecht zu den Flachseiten von einer oder beiden der Stromschienen angeordnet ist. Die Leiterplatte kann im Basismodulgehäuse also hochkant angeordnet sein, während die Stromschienen flach liegend angeordnet sind. Insbesondere können die Längsachsen der Leiterplatte und der ersten Stromschiene parallel zueinander, aber die Querachsen senkrecht zueinander ausgerichtet sein. Dabei können die Steuerkontaktelemente der Leiterplatte in Richtung einer oben liegenden Außenkante der Leiterplatte ausgerichtet sein, sodass das Relais von oben her aufgesteckt werden kann.

Um das Universalmodul an dem Basismodul zu befestigen, kann das Universalmodul über eine aus Kunststoff gefertigte, vorzugsweise angeformte oder angegossene, das heißt einstückig damit ausgebildete Halterung rein mechanisch mit dem Basismodul verbunden sein. Durch die elektrisch kontaktierende Überbrückung durch das Relais wird keine weitere elektrisch leitfähige Verbindung benötigt, sodass eine kostengünstige Kunststoffhalterung ausreichend ist.

Um den durch das Relais schaltbaren Strom gegen Kurzschlüsse oder ähnliches abgesichert an eine Vielzahl von elektrischen Verbrauchern zu verteilen, kann die zweite Stromschiene eine Mehrzahl von Steckplätzen zur Aufnahme von elektrischen Sicherungen aufweisen. Dabei ist der über das Relais geschaltete Strom über die Sicherungen zu den elektrischen Verbrauchern des Fahrzeugs führbar. So ergibt sich ein Strompfad von der ersten Stromschiene, über deren Lastkontaktelement sowie über das durchgeschaltete Relais, hin zu dem Lastkontaktelement der zweiten Stromschiene sowie durch die Sicherungen bis zu den einzelnen elektrischen Verbrauchern.

Der durch das Überbrücken mittels Relais verringerte Montageaufwand macht sich besonders vorteilhaft bemerkbar, wenn an dem Basismodul eine Mehrzahl von Universalmodulen angebunden ist, deren jeweilige zweite Stromschiene über jeweils wenigstens ein Relais mit der (einzigen) ersten Stromschiene elektrisch verbunden ist.

Die Erfindung betrifft auch ein Verfahren zum Diagnostizieren eines Zustands, insbesondere Schaltzustands, eines elektromechanischen Bauelements einer elektrischen Stromversorgungseinrichtung eines Fahrzeugs in einer oder mehreren der vorstehend erläuterten Ausführungsvarianten. Das elektromechanische Bauelement verfügt über wenigstens einen durch ein Fußelement gebildeten Lastkontakt. Das Verfahren umfasst die folgenden Schritte:
- Abgreifen des Laststroms an dem Lastkontakt durch ein gestecktes erstes Gegenkontaktelement. Es erfolgt also einesteils ein Stromabgriff an dem Lastkontakt.
- Abgreifen einer elektrischen Spannung an demselben Lastkontakt durch ein gestecktes zweites Gegenkontaktelement. Anderenteils erfolgt neben dem Stromabgriff auch ein Spannungsabgriff an einem gemeinsamen, einzigen Lastkontakt.
- Weiterführen des abgegriffenen Stroms über einen elektrischen Leiter. Der Stromabgriff dient demnach hauptsächlich dem Weiterführen des elektrischen Stroms an einen oder mehrere elektrische Verbraucher des Fahrzeugs zur Stromversorgung.
- Verarbeiten und/oder Auswerten der abgegriffenen Spannung zum Überprüfen des Zustands, insbesondere Schaltzustands, des elektromechanischen Bauelements. Die abgegriffene Spannung wird vorzugsweise auf einer das zweite Gegenkontaktelement aufweisenden Leiterplatte verarbeitet und/oder ausgewertet.

### Kurze Figurenbeschreibung

Nachfolgend wird ein vorteilhaftes Ausführungsbeispiel der Erfindung unter Bezugnahme auf die begleitenden Figuren erläutert. Es zeigen:
Fig. 1 einen erfindungsgemäße elektrischen Stromverteiler mit einem Relais, das eine erste Stromschien und eine zweite Stromschiene kontaktiert;
Fig. 2 einen erfindungsgemäßen Stromverteiler mit einem Basismodul, das eine hochkant angeordnete Leiterplatte aufweist, und mit mehreren Universalmodulen;
Fig. 3 einen erfindungsgemäße elektrischen Stromverteiler mit einer Stecksicherung;
Fig. 4 einen schematisch dargestellten Ausschnitt einer Stromversorgungseinrichtung, bei der an einem Lastkontakt sowohl ein Stromabgriff als auch ein Spannungsabgriff mit zwei voneinander getrennten Trägerelementen erfolgt;
Fig. 5 eine Seitenansicht der Stromversorgungseinrichtung aus Fig. 4;
Fig. 6 eine Leiterplatte mit einem daran angebrachten Gabelkontakt, deren Steckkontaktaufnahme parallel zu einer Stirnseite der Leiterplatte geöffnet ist;
Fig. 7 eine Leiterplatte mit einer Mehrzahl von daran angebrachten Gabelkontakten;
Fig. 8 eine Leiterplatte mit einem daran angebrachten Gabelkontakt, der sich mit Abstützfüßen auf einer Stirnseite der Leiterplatte abstützt;
Fig. 9 eine Leiterplatte mit einem daran angebrachten, gekröpft ausgeführten Gabelkontakt;
Fig. 10 eine Leiterplatte mit einem daran angebrachten Gabelkontakt, der über Klemmschenkel an der Leiterplatte befestigt ist;
Fig. 11 eine Seitenansicht der Leiterplatte mit Gabelkontakt aus Figur 10;
Fig. 12 einen elektrischen Stromverteiler mit einer darin hochkant angeordneten Leiterplatte;
Fig. 13 eine Leiterplatte mit einer stirnseitig offenen Ausklinkung, in der ein Steckkontakt angeordnet ist;
Fig. 14 einen Steckkontakt zum Anordnen in einer Ausklinkung einer Leiterplatte als Einzelteil;
Fig. 15 eine Seitenansicht einer Ausklinkung einer Leiterplatte, in der ein Steckkontakt angeordnet ist;
Fig. 16 einen elektrischen Stromverteiler mit einer darin hochkant angeordneten Leiterplatte;

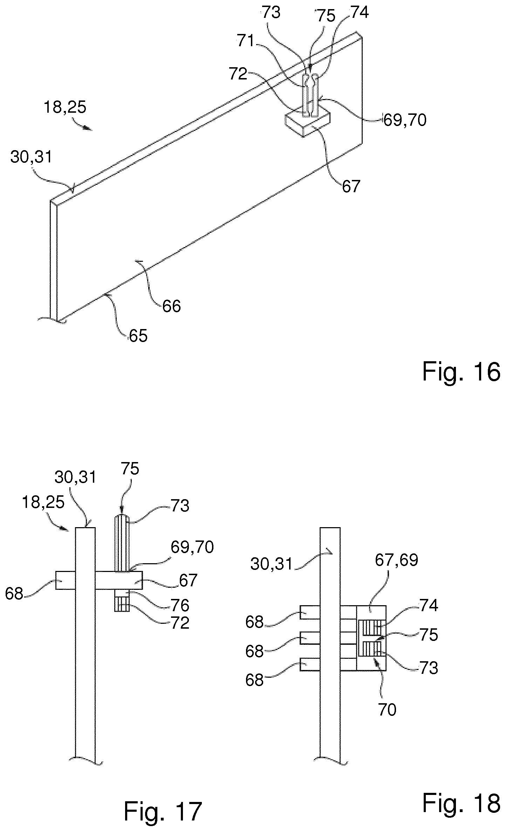

Fig. 16 eine Leiterplatte mit einem an der Flachseite angebrachten Steckkontaktträger und einem stirnseitig geöffneten Steckkontakt in einer perspektivischen Ansicht;
Fig. 17 eine Seitenansicht der Leiterplatte aus Fig. 16;
Fig. 18 eine Draufsicht auf die Leiterplate aus Fig. 16 oder 17;

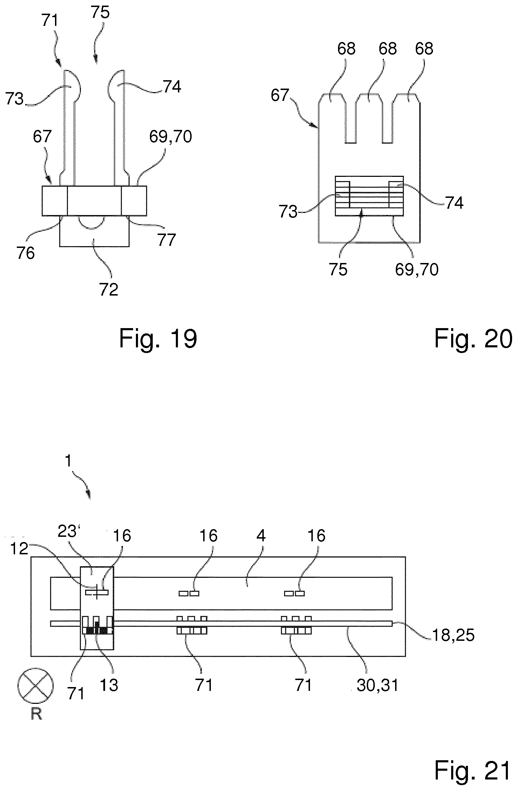

Fig. 19 eine Vorderansicht eines Steckkontaktträgers mit daran angebrachtem Steckkontakt;
Fig. 20 eine Draufsicht auf einen Steckkontaktträger mit daran angebrachtem Steckkontakt;
Fig. 21 eine Draufsicht auf einen elektrischen Stromverteiler mit einer darin hochkant angeordneten Leiterplatte;

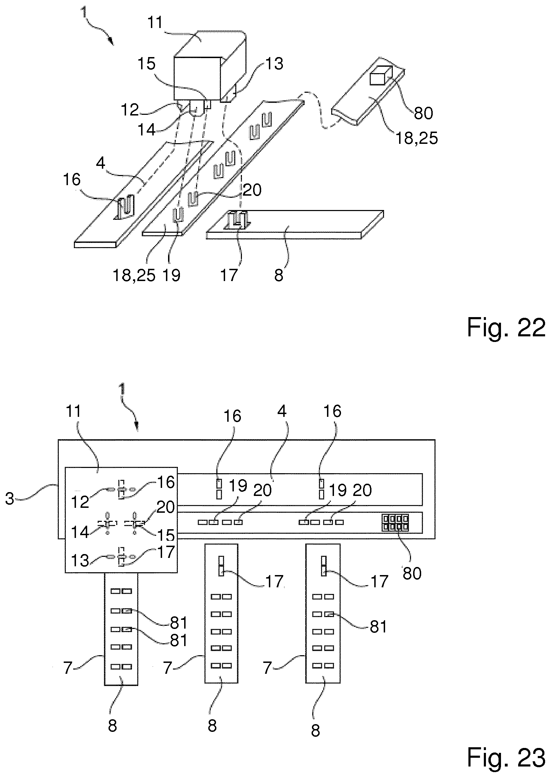

Fig. 22 eine erfindungsgemäße Stromversorgungseinrichtung mit einem Relais, einer Leiterplatte und zwei Laststromleitern;
Fig. 23 eine erfindungsgemäße Stromversorgungseinrichtung, die in einem Stromverteilergehäuse untergebracht ist;

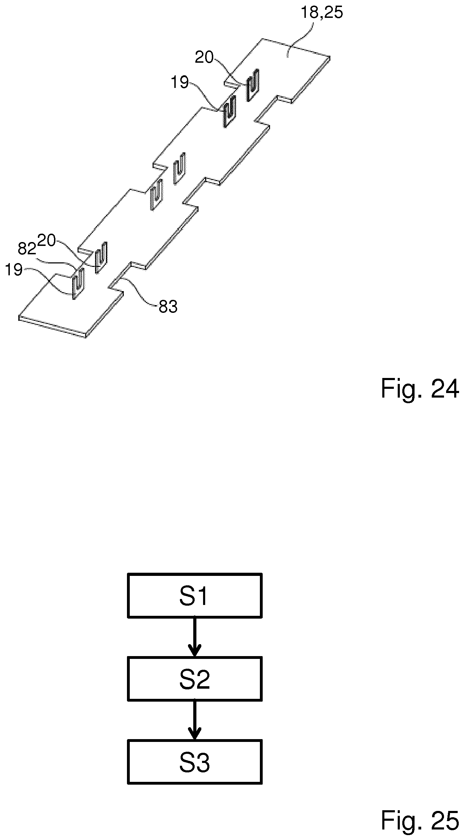

Fig. 24 eine Leiterplatte einer erfindungsgemäße Stromversorgungseinrichtung, wobei die Leiterplatte Ausklinkungen aufweist; und
Fig. 25 einen Ablaufplan eines erfindungsgemäßen Verfahrens.

Die Figuren sind lediglich schematische Darstellungen und dienen nur der Erläuterung der Erfindung. Gleiche oder gleichwirkende Elemente sind durchgängig mit den gleichen Bezugszeichen versehen.

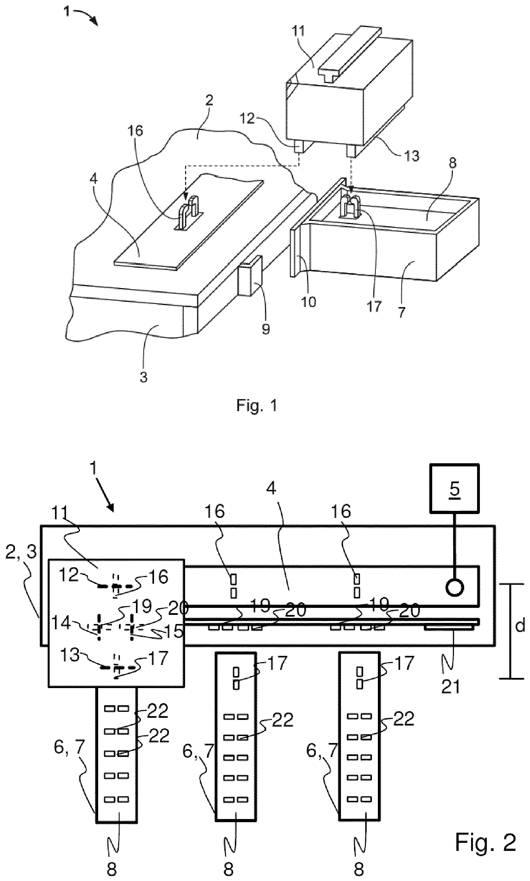

Figur 1 zeigt in einer perspektivischen Draufsicht einen erfindungsgemäßen elektrischen Stromverteiler 1 für ein Fahrzeug. Dieser dient der Versorgung von einer Vielzahl von elektrischen Verbrauchern des Fahrzeugs.

Der Stromverteiler 1 weist ein Basismodul 2 mit einem im Wesentlichen aus Kunststoff gefertigten Basismodulgehäuse 3 auf, in dem zumindest eine erste Stromschiene 4 angeordnet ist. Die erste Stromschiene 4 ist hier als Stanz-/Biegeteil aus Aluminium oder einer Aluminiumlegierung gefertigt und ist mit einer Stromversorgungseinrichtung 5 (siehe Figur 2) elektrisch verbunden, bei der es sich beispielweise um eine Fahrzeugbatterie handelt. Von der Stromversorgungseinrichtung 5 lässt sich ein elektrischer Strom, der bis zu 250 A betragen kann, in die erste Stromschiene 4 einspeisen.

Zudem verfügt der Stromverteiler 1 auch über wenigstens ein Universalmodul 6, mit dem sich der Stromverteiler 1 zur Versorgung weiterer elektrischer Verbraucher individuell erweitern lässt. Je nach, zum Beispiel, der Fahrzeugkonfiguration ist eine Mehrzahl von Universalmodulen 6 vorgesehen, von denen in Figur 1 aber nur ein einziges exemplarisch dargestellt ist. Das Universalmodul 6 hat ein im Wesentlichen aus Kunststoff gefertigtes Universalmodulgehäuse 7. Darin ist eine zweite Stromschiene 8 angeordnet, die hier im Wesentlichen senkrecht zu der ersten Stromschiene 5 des Basismoduls 2 angeordnet ist.

In Figur 1 ist auch erkennbar, dass das Basismodulgehäuse 3 und das Universalmodulgehäuse 7 über jeweils daran angeformte Halteteile 9 und 10 aneinander befestigbar sind, wobei diese hier zum Ineinandergreifen durch Stecken ausgebildet sind. Die aus dem Gehäusekunststoff gefertigten Halteteile 9, 10 weisen also kein elektrisches leitfähiges Kontaktteil auf, sondern dienen lediglich der mechanischen Befestigung des Universalmoduls 6 an dem Basismodul 2. Die erste und zweite Stromschiene 4, 8 sind durch die beiden Gehäuse 3, 7 voneinander getrennt und dadurch gegeneinander elektrisch isoliert. Zudem ist die zweite Stromschiene 8 unter Umständen für eine geringere Stromtragfähigkeit als die erste Stromschiene 4 dimensioniert, da sich der auf der ersten Stromschiene 4 geführte Laststrom je nach Anzahl der Universalmodule 6 auf mehrere parallel geschaltete, zweite Stromschienen 8 verteilen kann.

Darüber hinaus weist der Stromverteiler 1 ein oder mehrere Relais 11 zum Schalten des in die erste Stromschiene 4 des Basismoduls 2 eingespeisten Stroms auf, wobei hier exemplarisch nur ein einziges Relais 11 gezeigt ist. Das Relais 11 ist als Steckrelais ausgeführt und weist an seiner Unterseite ein Paar, also zwei Lastkontakte 12 und 13 zum Führen des zu schaltenden Laststroms sowie ein Paar, also zwei Steuerkontakte 14 und 15 (siehe Figur 2) zum Führen eines das Relais 11 anzusteuernden Steuerstroms auf. Sowohl die Lastkontakte 12 und 13 als auch die Steuerkontakte 14 und 15 (siehe Figur 2) sind als steckbare Kontaktfüße ausgebildet. In diesem Ausführungsbeispiel stehen die beiden fußförmigen Lastkontakte 12, 13 senkrecht zu den beiden fußförmigen Steuerkontakten 14, 15 (siehe Figur 2). Ein solches Relais 11 ist in verschiedenen Ausführungsformen sowie zum Schalten unterschiedliche Lastströme als Zukaufteil erhältlich. Der Steuerstrom zum Ansteuern des Relais 11 beträgt größenmäßig etwa zwischen 75 mA und etwa 1 A, der schaltbare Laststrom darf je nach Ausführung des Relais 11 zum Beispiel 30 A bis 50 A oder mehr betragen.

In Figur 1 ist mit gestrichelten Linien sowie Pfeilen angedeutet, dass das Relais 11 mit seinem ersten Lastkontakt 12 die erste Stromschiene 4 des Basismoduls 2 und mit seinem zweiten Lastkontakt 13 die zweite Stromschiene 8 kontaktiert. Die räumliche Trennung und ein Abstand d (siehe Figur 2) zwischen den beiden Stromschienen 4, 8 wird also durch das Relais 11 überbrückt, sodass dem Relais 11 eine Doppelfunktion innewohnt, nämlich zum einen die Schaltfunktion des Stroms von der ersten Stromschiene 4 hin zur zweiten Stromschiene 8 und zum anderen eine direkte Anbindung des Universalmoduls 6 an das Basismodul 2. Der Abstand d zwischen den beiden Stromschienen 4, 8 beträgt für ein Überbrücken durch direktes Stecken des Relais 11 idealerweise in etwa so viel, wie die Lastkontakte 12, 13 des Relais 11 voneinander beabstandet sind. Das heißt, dass die der Stromschienen 4, 8 voneinander in etwa so weit beabstandet sind, wie die Lastkontakte 12, 13 voneinander beabstandet sind. Typische Abstände der Lastkontakte 12, 13 zueinander betragen deshalb wenige Millimeter, zum Beispiel zwischen 8mm bis 18mm.

Da es sich bei dem Relais 11 hier um ein Steckrelais handelt, weisen die erste Stromschiene 4 ein Lastkontaktelement 16 und die zweite Stromschiene 8 ein Lastkontaktelement 17 auf, die jeweils als Steckkontaktaufnahmen für die fußförmigen Lastkontakte 12, 13 des Relais 11 ausgeführt sind. In diesem Ausführungsbeispiel sind die Lastkontaktelemente 16, 17 als paketierbare Lamellenkontakte mit einer gabelförmigen Steckkontaktaufnahme ausgebildet, die in Abhängigkeit der Stromstärke des eingespeisten bzw. geschalteten Stroms mehr oder weniger einzelne Lamellen aufweist. In Figur 1 ist exemplarisch nur ein einziges Lastkontaktelement 16 gezeigt, jedoch weist die erste Stromschiene 4 des Basismoduls 2 für eine bestimmte Anzahl Universalmodule 6 eine bestimmte Anzahl von Lastkontaktelementen 16 auf, also bei zwei oder Universalmodulen 6 zwei oder drei Lastkontaktelemente 16. Die zweite Stromschiene 8 eines Universalmoduls 6 dagegen weist nur ein Lastkontaktelement 17 auf. Der Abstand d zwischen den Lastkontaktelementen 16 und 17 beträgt in etwa 8mm bis 18mm.

Figur 2 zeigt in einer Draufsicht den Stromverteiler 1 in einer detaillierten Ausgestaltung. Es ist erkennbar, dass die erste Stromschiene 4 gemeinsam mit einer dazu parallel angeordneten Leiterplatte 18 in dem Basismodulgehäuse 3 untergebracht ist. Die Leiterplatte 18 dient hier der Ansteuerung des Relais 11 zum Schalten des Stroms von dem einen Lastkontakt 12 zu dem anderen Lastkontakt 13. Zur Ansteuerung weist die Leiterplatte 18 daher ein Paar, also zwei Steuerkontaktelemente 19 und 20 zur Kontaktierung der Steuerkontakte 14, 15 des Relais 11 auf. Um den Abstand d zwischen der ersten Stromschiene 4 und der zweiten Stromschiene 8 möglichst gering zu halten, ist die zwischen den Stromschienen 4, 8 angeordnete Leiterplatte 18 hochkant in dem Basismodulgehäuse 3 ausgerichtet. Das heißt, dass Flachseiten der ersten Stromschiene 4 und der Leiterplatte 18 im Wesentlichen senkrecht zueinander angeordnet sind. Die Steuerkontaktelemente 19 und 20 sind deshalb zur in Figur 2 obenliegenden Außenkante der Leiterplatte 18 hin ausgerichtet. Darüber hinaus sind die Steuerkontaktelemente 19, 20 über eine (nicht dargestellte) Vielzahl von Leiterbahnen mit einem Steckkontakt 21 für einen (nicht dargestellten) Elektronikaufsatz elektrisch verbunden. Mit dem auf den Steckkontakt 21 aufsteckbaren Elektronikaufsatz wird ein Steuerstrom, der zum Ansteuern des Relais 11 über die Steckkontaktelemente 19, 20 auf die Steuerkontakte 14, 15 zu führen ist, elektronisch gesteuert. Die Leiterbahnen sind so dimensioniert, dass deren Stromtragfähigkeit in etwa dem Betrag des Steuerstroms entspricht.

In diesem Ausführungsbeispiel sind auf der Leiterplatte 18 drei Paar Steuerkontaktelemente 19, 20 angeordnet. Dementsprechend sind auf der ersten Stromschiene 4 drei Lastkontaktelemente 16 angeordnet, wodurch drei Relais 11 ansteuerbar sind. Zur besseren Illustration ist hier jedoch nur ein einziges Relais 11 dargestellt, wobei dessen Steuerkontakte 14, 15 und Lastkontakte 12, 13 (weil vom Relaisgehäuse verdeckt) als gestrichelte Linien dargestellt sind. Des Weiteren sind hier exemplarisch drei Universalmodule 6 mit jeweils einer zweiten Stromschiene 8 an dem Basismodul 2 angeordnet. Jedes der Universalmodule 6 lässt sich also über ein dafür vorgesehenes Relais 11 elektrisch mit der (einzigen) ersten Stromschiene 4 des Basismoduls verbinden. Des Weiteren geht aus Figur 2 hervor, dass die zweite Stromschiene 8 der Universalmodule 6 eine Mehrzahl von Steckkontakten 22 aufweist, in die (nicht dargestellte) Stecksicherungen zur Absicherung der über die zweite Stromschienen 8 zu versorgenden elektrischen Verbraucher einsteckbar sind.

Ausgehend von dem dargestellten Ausführungsbeispiel kann der erfindungsgemäße Stromverteiler 1 in vielerlei Hinsicht abgewandelt werden. So ist es möglich, dass für unterschiedliche Universalmodule 6 hinsichtlich des schaltbaren Stroms unterschiedlich dimensionierte Relais 11 vorgesehen sind. Es ist auch möglich, dass die Ansteuerung des oder der Relais 11 nicht über eine Leiterplatte, sondern zum Beispiel über biegeschlaffe elektrische Leitungen erfolgt, die zu den Steuerkontakten 14, 15 der Relais 11 hingeführt sind und diese beispielsweise direkt kontaktieren.

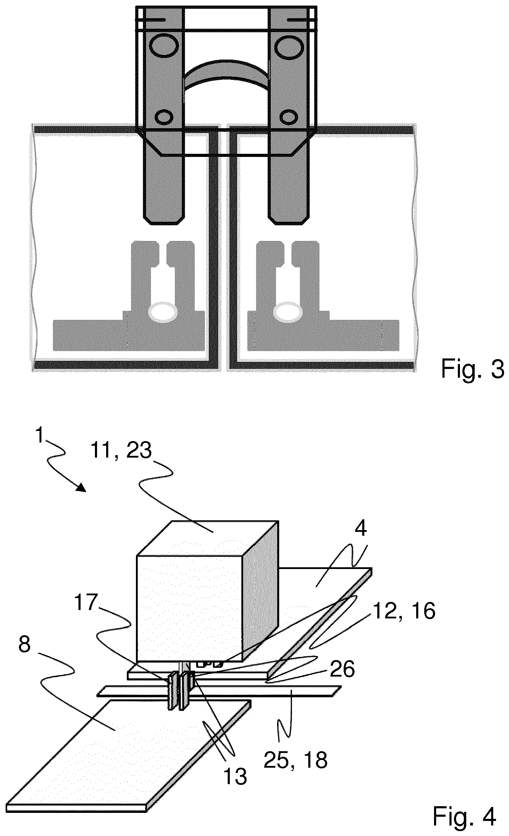

Fig. 3 zeigt einen erfindungsgemäßen elektrischen Stromverteiler mit einer Stecksicherung. Anstelle dem in Fig. 1 und Fig. 2 verwendeten Relais werden die erste Stromschiene und die zweite Stromschiene mittels einer Stecksicherung kontaktiert. Ein Stromverteiler bestehend aus einer Basiskomponente kann bei Bedarf durch mehrere Erweiterungsmodule ergänzt werden. Diese Module sind als eigenes Kunststoffteil ausgeführt und werden durch Führungen und Clipse an der Basiskomponente befestigt. Bisher wurden solche Erweiterungsmodule elektrisch über Leitungsbrücken, oder über zusätzliche bauteilspezifische Steckzungen am Erweiterungsmodul, mit der Basiskomponente kontaktiert. Das hier dargestellte Ausführungsbeispiel ersetzt dieses zusätzliche Bauteil (Leitungsbrücke/Steckzunge) durch eine Schmelzstecksicherung die eine Brücke zwischen Basiskomponente und Erweiterungsmodul bildet und dadurch die elektrische Verbindung darstellt. Diese Sicherung kann idealerweise eine bereits vorhandene Sicherung ersetzen. Durch die beidseitige Kontaktierung an einen Gabelkontakt (1. Kontakt in Basiskomponente, 2. Kontakt auf Erweiterungsmodul) kann im Vergleich zur Steckzungenlösung ein doppelter Toleranz- und Relativbewegungsausgleich dargestellt werden. Dies reduziert die Gefahr von Reibkorrosion im Kontaktbereich durch mehrere geometrische Freiheitsgrade.

In Fig. 4 ist ein Ausschnitt einer Stromversorgungseinrichtung 1 für ein Fahrzeug dargestellt, die hier als elektrischer Stromverteiler ausgeführt ist. Die Stromversorgungseinrichtung 1 dieses Ausführungsbeispiels weist eine erste Stromschiene 4 als Versorgungsstromschiene auf, die hier mit einer (nicht gezeigten) Stromquelle des Fahrzeugs elektrisch verbunden ist. Die Stromquelle speist einen zu verteilenden elektrischen Strom in die erste Stromschiene 4 ein. Die erste Stromschiene 4 verfügt zum Weiterführen dieses Stroms über wenigstens ein erstes Lastkontaktelement 16, das hier als paketierbarer Lamellen-Gabelkontakt ausgeführt ist.

Zudem verfügt die Stromversorgungseinrichtung 1 über eine zur ersten Stromschiene 4 separat ausgebildete, zweite Stromschiene 8 als Laststromschiene. Die zweite Stromschiene 8 dient hier als erstes Trägerelement für ein darauf angebrachtes, elektrisch leitfähiges, zweites Lastkontaktelement 17, das als erstes Gegenkontaktelement dient. Das zweite Lastkontaktelement 17 ist ebenfalls als paketierbarer Lamellen-Gabelkontakt ausgeführt, der je nach Stromstärke des darüber geführten Stroms eine variable Anzahl von paketierten Lamellen aufweist.

In Fig. 4 ist erkennbar, dass die Stromversorgungseinrichtung 1 ferner ein elektromechanisches Steckrelais 11, 23 aufweist. Das Steckrelais 11, 23 weist einen durch ein Fußelement gebildeten, das heißt fußförmigen, ersten (Eingangs-)Lastkontakt 12 und einen durch ein weiteres Fußelement gebildeten, das heißt fußförmigen, zweiten (Ausgangs-)Lastkontakt 13 sowie zwei (nicht gezeigte) ebenfalls fußförmige Steuerkontakte auf. Das Steckrelais 11, 23 verbindet im durchgeschalteten Zustand die erste Stromschiene 4 mit der zweiten Stromschiene 8 und dient zum Schalten von zumindest einem Teil des in die erste Stromschiene 4 eingespeisten Laststroms hin zu der zweiten Stromschiene 8. Die fußförmigen Lastkontakte 12, 13 dienen dabei dem Zu- und Abführen des durch das Steckrelais 11, 23 zu schaltenden Laststroms. Der erste Lastkontakt 12 ist in das erste Lastkontaktelement 16 der ersten Stromschiene 4 und der zweite Lastkontakt 13 ist in das zweite Lastkontaktelement 17 der zweiten Stromschiene 13 eingesteckt. Die (nicht dargestellten) Steuerkontakte dienen der Ansteuerung des Steckrelais 11, 23 zum Schalten des zu verteilenden Laststroms über einen betragsmäßig kleineren Steuerstrom.

Ein Strompfad des Laststroms erstreckt sich von der ersten Stromschiene 4, in die der Laststrom von der (nicht dargestellten) Stromquelle eingespeist wird, über das erste Lastkontaktelement 16 der ersten Stromschiene 4, hin zum ersten Lastkontakt 12 des Steckrelais 11, 23. Wenn sich das Steckrelais 11, 23 im durchgeschalteten Zustand befindet, erstreckt sich der Strompfad weiter über den zweiten Lastkontakt 13 und das zweite Lastkontaktelement 17 der als erstes Trägerelement dienenden, zweiten Stromschiene 8 hin zu damit verbundenen elektrischen Verbrauchern des Fahrzeugs.

Die Stromversorgungseinrichtung 1 weist auch eine zwischen der ersten und zweiten Stromschiene 4, 8 angeordnete, getrennt bzw. separat dazu ausgebildete Leiterplatte 25, 18 auf. Die Leiterplatte 25, 18 verfügt über (nicht gezeigte) Leiterbahnen sowie (nicht gezeigte) elektrische und/oder elektronische Bauelemente. Zudem dient die Leiterplatte 25, 18 hier als zweites Trägerelement für ein darauf angebrachtes sowie elektrisch leitfähiges, zweites Gegenkontaktelement 26. Auch das zweite Gegenkontaktelement 26 ist hier als lamellenförmiger Gabelkontakt ausgeführt, wobei hier weniger Lamellen paketiert sind als bei dem als erstes Gegenkontaktelement dienenden Lastkontaktelement 17. In Figur 1 ist nur andeutungsweise erkennbar, dass das zweite Gegenkontaktelement 26 der Leiterplatte 25, 18 auch den zweiten Lastkontakt 13 des Steckrelais 11, 23 kontaktiert. Somit wird der zweite Lastkontakt 13 gleichzeitig durch zwei voneinander getrennte Gegenkontaktelemente kontaktiert, nämlich durch das Lastkontaktelement 17 als erstes Gegenkontaktelement der zweiten Stromschiene 8 und das zweite Gegenkontaktelement 26 der Leiterplatte 25, 18.

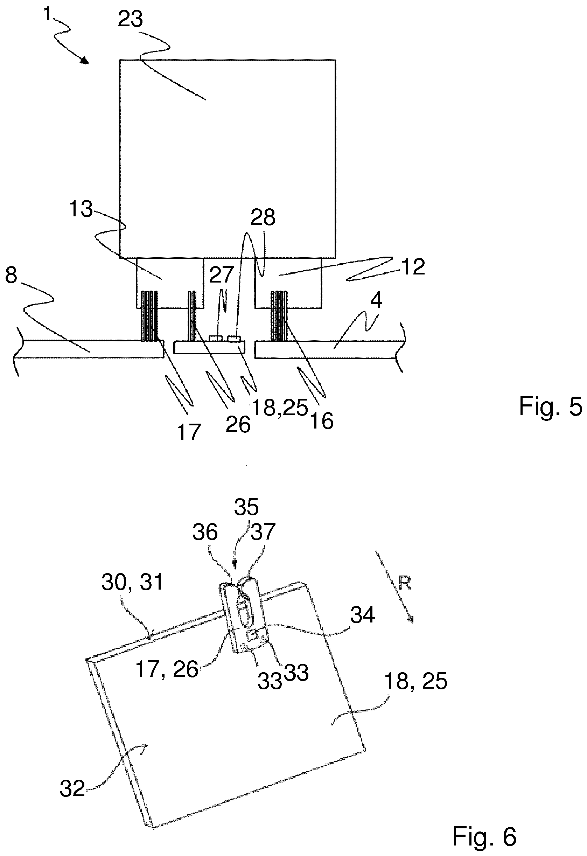

In Fig. 5, die die Stromversorgungseinrichtung 1 aus Figur 4 in einer Seitenansicht zeigt, ist besser zu erkennen, dass der zweite Lastkontakt 13 des Steckrelais 11, 23 gleichzeitig sowohl mit dem zweiten Lastkontaktelement 17 der zweiten Stromschiene 8 als auch mit dem zweiten Gegenkontaktelement 26 der Leiterplatte 25, 18 elektrisch verbunden ist. Am zweiten Lastkontakt 13 des Steckrelais 11, 23 erfolgen also gleichzeitig zwei Abgriffe durch unterschiedliche, voneinander konstruktiv und funktional getrennte Trägerelemente, nämlich die zweite Stromschiene 8 und die Leiterplatte 25, 18.

Der eine Abgriff am zweiten (Ausgangs-)Lastkontakt 13 des Steckrelais 11, 23 durch die zweite Stromschiene 8 über das zweite Lastkontaktelement 17 ist ein Stromabgriff zum Weiterführen des abgegriffenen, vom Steckrelais 11, 23 geschalteten Laststroms über die zweite Stromschiene 8 hin zu elektrischen Verbrauchern des Fahrzeugs. Dagegen ist der andere Abgriff an dem zweiten (Ausgangs-)Lastkontakt 13 über das zweite Gegenkontaktelement 26 der Leiterplatte 25, 18 ein Spannungsabgriff mit anschließender Spannungsmessung durch eine Messeinrichtung 27, die in diesem Ausführungsbeispiel als integrierte Schaltung auf der Leiterplatte 25, 18 angeordnet ist. Zum Auswerten der Spannungsmessung ist eine mit der Messeinrichtung 27 verbundene oder damit zusammengefasste Auswerteinrichtung 28 vorgesehen, bei der es sich hier um einen auf der Leiterplatte 25, 18 angeordneten Logikbaustein handelt.

Das Verfahren zur Diagnose eines Schaltzustands des Steckrelais 11, 23 der Stromversorgungseinrichtung 1 kann nachfolgend beschrieben ablaufen.

Zunächst wird der vom Steckrelais 11, 23 geschaltete Laststrom an dem zweiten Lastkontakt 13 des Steckrelais 11, 23 durch das daran angesteckte, als erstes Gegenkontaktelement dienende Lastkontaktelement 17 abgegriffen. An demselben Lastkontakt 13 wird gleichzeitig die an dem zweiten Lastkontakt 13 anliegende elektrische Spannung abgegriffen. Der abgegriffene Laststrom wird dann über die als elektrischer Leiter dienende, zweite Stromschiene 13 hin zu elektrischen Verbrauchern des Fahrzeugs geführt. Die abgegriffene elektrische Spannung wird zum Überprüfen des Schaltzustands des Steckrelais 11, 23 in der Messeinrichtung 27 verarbeitet und/oder ausgewertet. Das Verarbeiten und/oder Auswerten umfasst das Messen einer Spannungshöhe, wobei ein erster Spannungspegel den durchgeschalteten Zustand und ein zweiter Spannungspegel den ungeschalteten Zustand des Steckrelais 11, 23 widerspiegelt. Alternativ dazu, erfolgt das Verarbeiten und/oder Auswerten zum Beispiel dadurch, dass das Potential des Strompfads abgegriffen wird und eine Potentialdifferenz des abgegriffenen Potentials gegenüber eines an die Leiterplatte 25, 18 geführten Vergleichspotentials gemessen wird. Tritt hier eine Potentialdifferenz auf, befindet sich das Steckrelais 11, 23 im ungeschalteten Zustand. Tritt keine Potentialdifferenz auf, befindet sich das Steckrelais 11, 23 im durchgeschalteten Zustand. Das Auswerten umfasst hier des Weiteren auch eine Rückkopplung zu einem das Steckrelais 11, 23 ansteuerenden Relaistreiber

Ausgehend von dem dargestellten Ausführungsbeispiel lassen sich die erfindungsgemäße Stromversorgungseinrichtung 1 und das erfindungsgemäße Verfahren zur Diagnose eines Schaltzustands des vorstehend beispielhaft als Steckrelais ausgebildeten elektromechanischen Bauelements 11, 23 in vielerlei Hinsicht abwandeln.

So ist es zum Beispiel möglich, dass eine biegeschlaffe elektrische Leitung als Trägerelement für das erste Gegenkontaktelement (das zweite Lastkontaktelement 17) dient. Auch die erste Stromschiene 4 kann durch eine biegeschlaffe elektrische Leitung ersetzt werden. Das elektromechanische Bauelement muss auch kein Steckrelais sein, sondern kann beispielsweise ein anderer Schalter oder ähnliches sein. Es ist auch möglich, dass die Messung und/oder Auswertung der abgegriffenen Spannung nicht auf der Leiterplatte 25, 18, sondern durch ein damit über ein Fahrzeug-Bussystem, wie etwa einen LIN oder CAN, verbundenes Fahrzeug-Steuergerät erfolgt.

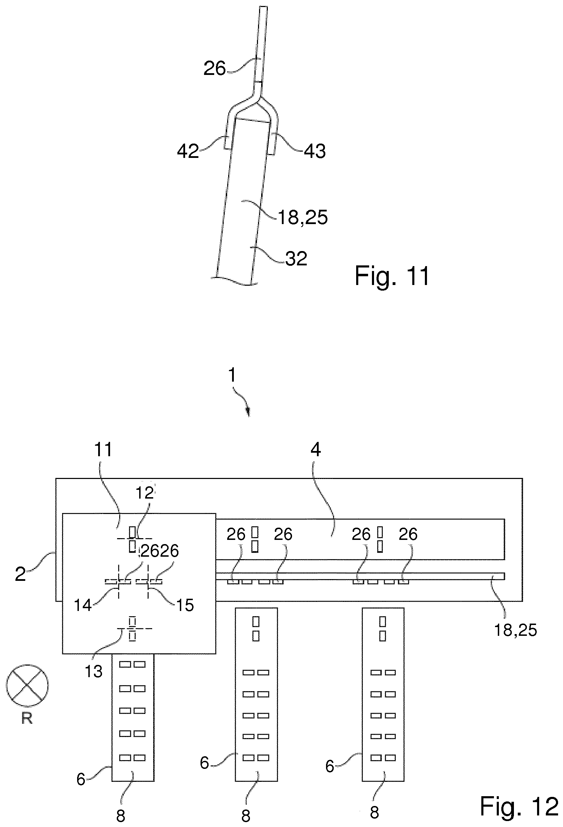

Figur 6 zeigt in einer schematischen Darstellung eine Leiterplatte 18, 25, die sich für den Einsatz in einem elektrischen Stromverteiler 1 (siehe Figur 12) eines Fahrzeugs eignet. Die Leiterplatte 18, 25 dient darin zum Beispiel der Ansteuerung und/oder Diagnose eines elektrischen, insbesondere elektromechanischen, Bauelements.

Es ist erkennbar, dass die Leiterplatte 18, 25 im Wesentlichen hochkant ausgerichtet ist, sodass eine erste Stirnseite 30 mit einer ersten Stirnfläche 31 oben und eine zweite (nicht näher bezeichnete) Stirnseite unten liegt. An einer Flachseite 32 der Leiterplatte 18, 25 ist in Nachbarschaft zu der ersten Stirnseite 30 ein elektrisch leitfähiger Gabelkontakt 17, 26 angeordnet, der mit einer Mehrzahl, also mindestens zwei, von hier Pin-förmigen Kontaktfüßen 33 die Leiterplatte 18, 25 elektrisch kontaktiert. Die Kontaktfüße 33 sind in diesem Ausführungsbeispiel als Durchsteckfüße für eine Durchsteckmontage (mittels THT) ausgeführt, also hier mit der Leiterplatte 18, 25 auf einer der Flachseite 32 gegenüberliegenden, weiteren (nicht näher bezeichneten) Flachseite verlötet. Hierzu sind die Kontaktfüße 33 in Richtung der Flachseite 32 gebogen. Zum Durchstecken der Kontaktfüße weist die Leiterplatte 18, 25 eine der Mehrzahl von Kontaktfüßen 33 entsprechende Anzahl von (nicht näher bezeichneten) Stanzlöchern auf, die eine elektrische Kontaktierung und Verlöten zulassen.

Zum Abstützen von Steck- und/oder Ziehkräften, die auf den Gabelkontakt 17, 26 wirken, sind ferner ein oder mehrere Abstützfüße 34 ausgebildet, von denen in diesem Ausführungsbeispiel genau ein einziger vorgesehen ist. Der oder die Abstützfüße 34 sind beispielsweise aus einem Blechmateriel des Gabelkontakts 17, 26 ausgestanzt und in Richtung Flachseite 32 der Leiterplatte 18, 25 heraus gebogen, also einstückig mit dem Gabelkontakt 17, 26 ausgebildet. Hier ist der Abstützfuß 34 in die Leiterplatte 18, 25 ohne eine elektrische Kontaktierung eingepresst, wozu die Leiterplatte 18, 25 ein (nicht näher bezeichnetes) Stanzloch aufweist.

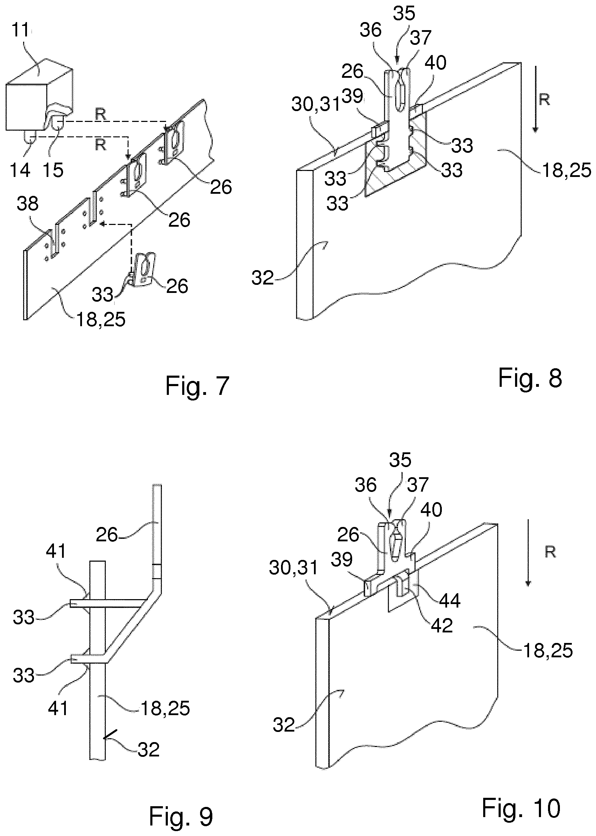

Zudem verfügt der Gabelkontakt 17, 26 über eine gabelförmige Steckkontaktaufnahme 35, die im Wesentlichen durch zwei aufeinander zugespannte, schenkelförmige Kontaktfedern 36 und 37 gebildet ist, indem zwischen diesen ein Aufnahmeraum besteht. Die Kontaktfedern 36, 37 sind in einer Richtung parallel zur Längserstreckung der ersten Stirnseite 30 aufeinander zugespannt. Die Steckkontaktaufnahme 35 dient zum Einstecken eines Steckkontakts 14 (siehe Figur 7) in einer Einsteckrichtung R und zum Halten desselben zwischen den Kontaktfedern 36, 37.

Aus Figur 6 geht auch hervor, dass die Steckkontaktaufnahme 35 im Wesentlichen parallel zu der ersten Stirnseite 30 der Leiterplatte 18, 25 geöffnet ist. Das heißt, dass sich die Einsteckrichtung R für den aufzunehmenden Steckkontakt 14 im Wesentlichen senkrecht zur Flachseite 32 der Leiterplatte 18, 25 erstreckt. Zudem steht der Gabelkontakt 17, 26 mit der Steckkontaktaufnahme 35 über die Stirnseite 30 bzw. Stirnfläche 31 hervor, was eine besonders kostengünstige, weil fertigungstechnisch einfach umsetzbare, Ausführungsvariante darstellt.

In den Figuren 7 bis 11 sind weitere Ausführungsformen der Leiterplatte 18, 25 und/oder des Gabelkontakts 17, 26 dargestellt. Zur Vermeidung von Wiederholungen werden nachfolgend nur die Unterschiede zu dem Vorstehenden erläutert.

In Figur 7 sind nun der Steckkontakt 14 sowie ein weiterer Steckkontakt 15 zu erkennen. Diese Steckkontakte 14 und 15 sind hier als fußförmige Steuerkontakte eines elektrischen Relais 11 ausgeführt. Für jeden Steckkontakt 14, 15 ist ein eigener Gabelkontakt 17, 26 vorgesehen. Über die Steckkontakte 14, 15 lässt sich das Relais 11 über einen in Leiterbahnen der Leiterplatte 18, 25 geführten Steuerstrom zum Schalten ansteuern. Auch eine Diagnose des Relais 11 ist möglich, wenn es sich bei den Steckkontakten 14, 15 um Lastkontakte zum Führen eines Laststroms handelt und über die Leiterplatte 18, 25 ein Spannungsabgriff erfolgt.

Gemäß Figur 7 weist die Leiterplatte 18, 25 zusätzlich zu den Stanzlöchern für insgesamt vier Kontaktfüße 33 je Gabelkontakt 26 auch für jeden Gabelkontakt 26 einen gefrästen Schlitz, d.h. Ausklinkung 38, auf, der sich von der Stirnseite 30 bzw. Stirnfläche 31 nach innen hin erstreckt. Dies ermöglicht es, den Gabelkontakt 26 mitsamt Steckkontaktaufnahme 35 entweder im Wesentlichen bündig mit oder hinter der Stirnfläche 31 abschließen zu lassen, sodass der Gabelkontakt 26 bzw. dessen Kontaktfedern 36, 37 vor mechanischer Beanspruchung geschützt sind. Denn die Steckkontakte 14, 15 lassen sich so in dem Schlitz 38 an dem Substrat der Leiterplatte 18, 25 vorbei hin zu den Gabelkontakten 26 führen. Der Schlitz 38 ist idealerweise mindestens so lang wie sich die Steckkontaktaufnahme 35 im Gabelkontakt 26 erstreckt.

Figur 8 zeigt eine andere Ausführungsform, bei der sich der Gabelkontakt 26 mit zwei weiteren Abstützfüßen 39 und 40, die sich in Richtung der Längserstreckung der Stirnseite 30 beidseitig von der Steckkontaktaufnahme 35 weg erstrecken. Die Abstützfüße 39, 40 liegen auf der Stirnfläche 31 auf und stützen den Gabelkontakt 26 dadurch daran ab, sodass Steckkräfte, die beim Einstecken des Steckkontakts 14, 15 auftreten, zumindest nicht vollständig auf die Kontaktfüße 33 wirken.

Bei der in Figur 9 in einer Seitenansicht gezeigten Ausführungsform ist der Gabelkontakt 26 derart gekröpft, dass die Steckkontaktaufnahme 35 von der Flachseite 32 der Leiterplatte 18, 25 deutlicher beabstandet ist. In Figur 9 ist zudem besser erkennbar, dass die Kontaktfüße 33 des Gabelkontakts 17, 26 durch die Leiterplatte 18, 25 hindurch gesteckt und auf der der Flachseite 32 gegenüberliegenden Seite mit dieser an Lötstellen 41 verlötet sind.

In den Figuren 10 und 11 ist eine Ausführungsform gezeigt, bei der der Gabelkontakt 17, 26 auf die Stirnseite 30 der Leiterplatte 18, 25 aufgesteckt oder daran oberflächenmontiert (mittels SMT) ist. Hierzu weist der Gabelkontakt 17, 26 statt den Kontaktfüßen 33 mindestens zwei Klemmschenkel 42 und 43 auf, die auf die Flachseite 32 der Leiterplatte 18, 25 hin zugespannt sind. Die Klemmschenkel 42, 43 kontaktieren die Leiterplatte 18, 25 an dafür vorgesehenen Lötflächen 44 und 45 auf der Flachseite 32 und der dieser gegenüberliegenden Seite, wobei dazwischen eine Lötverbindung besteht. Durch das vorherige Klemmen durch die Klemmschenkel 42, 43 lässt sich die Lötverbindung im Reflow-Verfahren durchführen, wobei ein Aufschwimmen des Gabelkontakts 17, 26 effektiv vermieden wird. Auch hier stützt sich der Gabelkontakt 17, 26 mit den Abstützfüßen 39, 40 auf der Stirnfläche 31 der Leierplatte 18, 25 ab, um Steckkräfte von der Lötstelle fernzuhalten.

Figur 12 zeigt eine beispielhafte Anwendung der Leiterplatte 18, 25 mit daran angebrachten Gabelkontakten 17, 26. Hier ist ein elektrischer Stromverteiler 1 für ein Fahrzeug mit einem Basismodul 2 und einer Mehrzahl von Erweiterungsmodulen 6 in einer Draufsicht dargestellt. Es ist erkennbar, dass eine erste Stromschiene 4 gemeinsam mit der dazu parallel angeordneten Leiterplatte 18, 25 in dem Basismodul 2 untergebracht ist. Die Leiterplatte 18, 25 dient hier der Ansteuerung des Relais 11 zum Schalten eines elektrischen Stroms von einem ersten Lastkontakt 12 zu einem anderen Lastkontakt 13 des Relais 11.

Zur Ansteuerung des Relais 11 weist die Leiterplatte 18, 25 daher ein Paar, also zwei Gabelkontakte 17, 26 zur Kontaktierung der Steuerkontakte 14, 15 des Relais 11 auf. Um einen Abstand d zwischen der ersten Stromschiene 4 und einer in dem jeweiligen Erweiterungsmodul 6 untergebrachten, zweiten Stromschiene 8 möglichst gering zu halten, ist die Leiterplatte 14 wiederum hochkant in dem Basismodul 2 ausgerichtet. Das heißt, dass Flachseiten der ersten Stromschiene 4 und der Leiterplatte 18, 25 (z.B. Flachseite 32) im Wesentlichen senkrecht zueinander angeordnet sind. Die Gabelkontakte 17, 26 sind deshalb zur in Figur 12 obenliegenden Stirnseite 30 der Leiterplatte 18, 25 hin ausgerichtet.

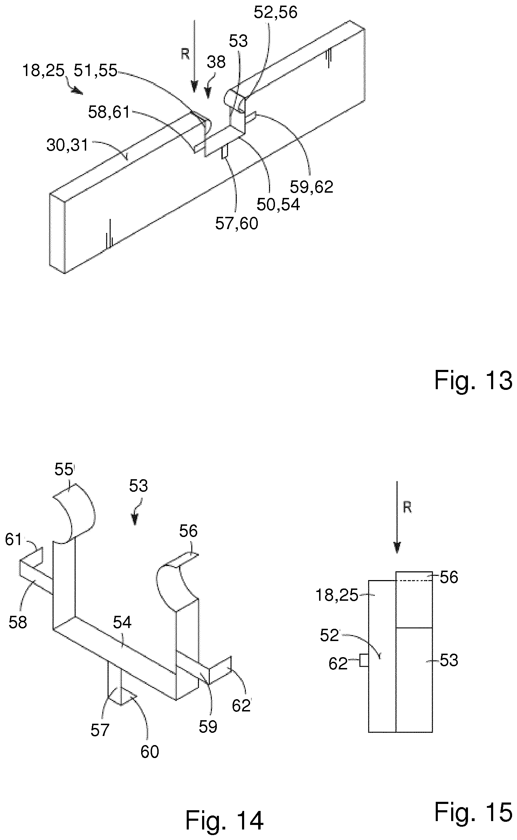

Fig. 13 zeigt in einer schematischen Darstellung eine Leiterplatte 18, 25, die sich für den Einsatz in einem elektrischen Stromverteiler 1 (siehe Fig. 16) eines Fahrzeugs eignet. Die Leiterplatte 18, 25 dient darin zum Beispiel der Ansteuerung und/oder Diagnose eines elektrischen Bauelements, wie etwa einem Relais oder ähnlichem.

Es ist erkennbar, dass die Leiterplatte 18, 25 im Wesentlichen hochkant ausgerichtet ist, sodass eine erste Stirnseite 30 mit einer ersten Stirnfläche 31 oben und eine zweite (nicht näher bezeichnete) Stirnseite unten liegt. An der (hier oberen) ersten Stirnseite 30 weist die Leiterplatte 18, 25 eine Ausklinkung 38 auf, die stirnseitig offen ist. Die Ausklinkung 38 ist U-förmig ausgebildet, indem von der Stirnfläche 31 her Material eines Leiterplattensubstrats im Wesentlichen quaderförmig ausgespart ist. Somit weist die Leiterplatte 18, 25 insgesamt drei Ausklinkungsflächen auf, nämlich eine erste Ausklinkungsfläche 50, eine zweite Ausklinkungsfläche 51 und eine dritte Ausklinkungsfläche 52. Die erste Ausklinkungsfläche 50 ist parallel zur ersten Stirnfläche 31 ausgerichtet und entsprechend einer Tiefe der Ausklinkung 38 davon beabstandet. Die zweite und dritte Ausklinkungsfläche 51 und 52 sind senkrecht zur ersten Stirnfläche 31 ausgerichtet und erstrecken sich in Tiefenrichtung der Ausklinkung 38 zwischen der ersten Stirnfläche 31 und der ersten Ausklinkungsfläche 50.

Aus Fig. 13 geht weiter hervor, dass in der Ausklinkung 38 ein Steckkontakt 53 angeordnet ist. Der Steckkontakt 53 dient der elektrischen kontaktierenden Aufnahme eines Gegensteckkontakts (siehe Fig. 16) in einer Steckrichtung R, um diesen elektrisch an die Leiterplatte 18, 25 anzubinden. Es ist erkennbar, dass der Steckkontakt 53 ebenfalls U-förmig ausgeformt ist, also zur ersten Stirnfläche 31 der Leiterplatte 18, 25 hin offen ist. Damit folgt seine Kontur im Wesentlichen der Kontur der Ausklinkung 38. Der Steckkontakt 53 schmiegt sich mit seinen Außenseiten also zumindest abschnittsweise an die drei Ausklinkungsflächen 50, 51 und 52 an.

Der Steckkontakt 53 ist als Stanz-/Biegeteil aus einem Blechmaterial durch Stanzen und Biegen gefertigt. Das Blechmaterial ist elektrisch gut leitfähig und besteht hier aus Aluminium oder einer Aluminiumlegierung. Der Steckkontakt 53 weist einen Basisteil 54 auf, der an der ersten Ausklinkungsfläche 50 anliegt und im Prinzip einen Anschlag für den Gegenkontakt (siehe Fig. 16) darstellt. Senkrecht vom Basisteil 54 erstrecken sich ein erster Federarm 55 und ein zweiter Federarm 56 in Richtung der ersten Stirnfläche 31. Die Federarme 55, 56 sind jeweils so gebogen, dass sie in Richtung der Ausklinkung 38 hinein vorgespannt sind. Damit bringen die Federarme 55, 56 jeweils eine Kontaktkraft auf den aufzunehmenden Gegenkontakt auf, sodass dieser im Steckkontakt gehalten wird.

Von dem Basisteil 54 sowie den beiden Federarmen 55, 56 erstrecken sich jeweils senkrecht dazu Kontaktarme 57, 58 und 59 über die Ausklinkungsflächen 50, 51 und 52 hinweg, also aus der Ausklinkung 38 hinaus. Je nach Art der elektrischen Kontaktierung und/oder der mechanischen Befestigung zwischen der Leiterplatte 18, 25 und dem Steckkontakt 53 unterscheidet sich die Ausgestaltung der Kontaktarme 57, 58, 59. Soll der Steckkontakt 53 mittels Oberflächenmontage (SMT) an der Leiterplatte 18, 25 angebracht sein, liegen die Leiterplatte 18, 25 und dem Steckkontakt 53 auf einer Flachseite der Leiterplatte 18, 25 auf. Die Kontaktierung erfolgt dann über darauf angeordneten Kontaktflächen in Form von Lötpads. Soll der Steckkontakt 53 dagegen, wie in Fig. 13 dargestellt, mittels Durchsteckmontage (THT) an der Leiterplatte 18, 25 angebracht sein, weisen die Kontaktarme 57, 58, 59 jeweils wenigstens einen Lötpin 60, 16 und 17 auf. Die Lötpins 60, 61, 62 sind von der in Fig. 13 vorderen Flachseite durch (nicht näher bezeichnete) Durchgangsöffnungen der Leiterplatte 18, 25 hindurch gesteckt und auf der in Fig. 13 hinteren Flachseite der Leiterplatte 18, 25 verlötet, wobei dort auch die elektrische Kontaktierung stattfindet.

In Fig. 14, die den Steckkontakt 53 als Einzelteil in einer leicht perspektivischen Ansicht zeigt, ist zu erkennen, dass die im Einbauzustand zur ersten Stirnfläche 31 weisenden Enden der Federarme 55, 56 in Richtung des aufzunehmenden Gegensteckkontakts konvex gebogen sind. Die Federarme 55, 56 sind also abschnittsweise von den Ausklinkungsflächen 51, 52 nach innen gewölbt und stützen sich außen an diesen ab. Dabei schließen die Federarme 55, 56 entweder bündig mit der ersten Stirnfläche 31 ab oder stehen um wenige Millimeter über diese hervor. Des Weiteren geht aus Fig. 14 hervor, dass die Kontaktarme 57, 58, 59 und die damit einstückig ausgebildeten Lötpins 60, 61, 62 zueinander senkrecht ausgerichtet sind. Die Lötpins 60, 61, 62 erstrecken sich im Einbauzustand in Dickenrichtung der Leiterplatte, also senkrecht auf die Flachseiten zu, und die Kontaktarme 57, 58, 59 parallel zu den Flachseiten der Leiterplatte 18, 25.

Fig. 15 zeigt Seitenansicht der Ausklinkung 38 der Leiterplatte 18, 25 mit dem darin angeordneten Steckkontakt 53. Darin ist erkennbar, dass der Steckkontakt 53 in Dickenrichtung der Leiterplatte 18, 25 eine Breite aufweist, die kleiner ist als die Dicke der Leiterplatte 18, 25. Das heißt, dass sich der Steckkontakt 53 nur über eine Teildicke der Leiterplatte 18, 25 zwischen den beiden Flachseiten der Leiterplatte 18, 25 erstreckt. Die Breite des Steckkontakts 53 ist in Abhängigkeit der für den Einsatzzweck der des Steckkontakts 53 geforderten Stromtragfähigkeit festgelegt. Um bei der in diesem Ausführungsbeispiel eingesetzten Durchsteckmontage ein Festlöten des Steckkontakts 53 an anderen Stellen als den Lötpins 60, 61, 62 zu verhindern, ist die Breite des Steckkontakts kleiner als die Dicke der Leiterplatte 18, 25. Die sich von den Kontaktarmen 57, 58, 59 in Dickenrichtung der Leiterplatte 18, 25 weg erstreckenden Lötpins 60, 61, 62 weisen für die Durchsteckmontage allerdings ein größere Länge auf als die Dicke der Leiterplatte 18, 25.

Fig. 12 zeigt eine beispielhafte Anwendung der Leiterplatte 18, 25 mit mehreren daran angebrachten Steckkontakten 53. Hier ist ein elektrischer Stromverteiler 1 für ein Fahrzeug mit einem Basismodul 2 und einer Mehrzahl von Erweiterungsmodulen 6 in einer Draufsicht dargestellt. Es ist erkennbar, dass eine erste Stromschiene 4 gemeinsam mit der dazu parallel angeordneten Leiterplatte 18, 25 in dem Basismodul 2 untergebracht ist. Die Leiterplatte 18, 25 dient hier der Ansteuerung eines hier als beispielhafter Gegensteckkontakt dienenden Relais 11, 23 zum Schalten eines elektrischen Stroms von einem ersten Lastkontakt 12 zu einem anderen Lastkontakt 13 des Relais 11, 23.

Zur Ansteuerung des Relais 11, 23 weist die Leiterplatte 18, 25 daher ein Paar, also zwei Steckkontakte 53 zur Kontaktierung von Steuerkontakten 14, 15 des Relais 11, 23 auf. Um einen Abstand d zwischen der ersten Stromschiene 4 und einer in dem jeweiligen Erweiterungsmodul 6 untergebrachten, zweiten Stromschiene 8 möglichst gering zu halten, ist die Leiterplatte 18, 25 wiederum hochkant in dem Basismodul 2 ausgerichtet. Das heißt, dass Flachseiten der ersten Stromschiene 4 und der Leiterplatte 18, 25 im Wesentlichen senkrecht zueinander angeordnet sind. Die Steckkontakte 53 sind deshalb zur in Fig. 16 obenliegenden Stirnseite 30 der Leiterplatte 18, 25 hin ausgerichtet.

Fig. 16 zeigt in einer schematischen Darstellung eine Leiterplatte 18, 25, die sich für den Einsatz in einem elektrischen Stromverteiler 1 (siehe Fig. 21) eines Fahrzeugs eignet. Die Leiterplatte 18, 25 dient darin zum Beispiel zum Führen eines Laststroms von bis zu 150 A eines die Leiterplatte 18, 25 direkt kontaktierenden Hochstrom-Verbrauchers des Fahrzeugs. Die Direktkontaktierung erfolgt zum Beispiel über eine elektrischen Leitung mit einem Kontaktteil, ein Relais, eine Sicherung oder ähnlichem. Die Leiterplatte 18, 25 dient mit einer entsprechenden Bestückung mit elektrischen und/oder elektronischen Bauelementen gegebenenfalls auch dem Schalten eines Laststroms.

In Fig. 16 ist erkennbar, dass die Leiterplatte 18, 25 im Wesentlichen hochkant ausgerichtet ist, so dass eine erste Stirnseite 30 mit einer ersten Stirnfläche 31 oben und eine zweite Stirnseite 65 unten liegt. An einer Flachseite 66 der Leiterplatte 18, 25 ist in Nachbarschaft zu der ersten Stirnseite 30 ein elektrisch leitfähiger Steckkontaktträger 67 angeordnet. Hier ist exemplarisch nur ein einziger Steckkontaktträger 67 gezeigt, allerdings kann die Leiterplatte 18, 25 auch eine Mehrzahl davon aufweisen. Der Steckkontaktträger 67 ist aus einem blechförmigen Metallwerkstoff gefertigt, bei dem es sich hier um Kupfer oder eine Kupferlegierung handelt.

Der Steckkontaktträger 67 verfügt über eine Mehrzahl, also mindestens zwei, von hier flachen, Pin-förmig ausgebildeten Durchsteckkontakten 68 (siehe Figuren 17 bis 20). Die Durchsteckkontakte 68 sind ebenfalls durch Stanzen einstückig mit dem Steckkontaktträger 67 ausgebildet und dienen der elektrischen Kontaktierung der Leiterplatte 18, 25. Der Steckkontaktträger 67 ist mit den Durchsteckkontakten 68 in die Flachseite 66 der Leiterplatte 18, 25 eingesteckt und steht von dieser senkrecht hervor. Die Durchsteckkontakte 68 sind in diesem Ausführungsbeispiel mittels Durchsteckmontage (through-hole technology, THT) angebracht, also hier mit der Leiterplatte 18, 25 auf einer der Flachseite 66 gegenüberliegenden, weiteren (nicht näher bezeichneten) Flachseite verlötet. Zur Aufnahme der Durchsteckkontakte 68 weist die Leiterplatte 18, 25 eine der Mehrzahl von Durchsteckkontakten 68 entsprechende Anzahl von (nicht näher bezeichneten) Löchern auf, bei denen es sich zum Beispiel um Stanz- oder Bohrlöcher mit einer angrenzenden elektrisch leitfähigen Kontaktfläche handelt, die eine elektrische Kontaktierung sowie ein Verlöten mit der Leiterplatte 18, 25 ermöglichen.

Aus Fig. 16 geht weiter hervor, dass der Steckkontaktträger 67 einen Trägerbereich 69 aufweist, der parallel zu der Stirnfläche 31 ausgerichtet ist. An dem Trägerbereich 69 ist ein Schlitz 70 durch Stanzen ausgebildet, wobei sich der Schlitz 70 quer, insbesondere senkrecht, zu der Erstreckungsrichtung der Durchsteckkontakte 68 erstreckt. Der Schlitz 70 ist hinsichtlich seiner geometrischen Abmessungen dazu eingerichtet, einen elektrischen Steckkontakt 71 steckend aufzunehmen. Der Steckkontakt 71 ist hochstromtragfähig mit einer Mehrzahl, also mindestens zwei, aneinander liegenden sowie blechförmig ausgeführten Kontaktlamellen gebildet. Der Steckkontakt weist an einem ersten axialen Ende einen Basisteil 72 auf, von dem sich in axialer Richtung zwei in Querrichtung aufeinander zugespannte Federarme 73 und 74 weg erstrecken. Die zumindest abschnittsweise voneinander beabstandeten Federarme 73, 74 bilden zwischen sich eine gabelförmige Steckkontaktaufnahme 75. Wie aus Fig. 16 hervorgeht, ist die Steckkontaktaufnahme 75 zur ersten Stirnseite 30 sowie zur ersten Stirnfläche 31 hin geöffnet, so dass sich die Leiterplatte 18, 25 über den Steckkontakt 71 durch einen (nicht dargestellten) Gegensteckkontakt stirnseitig, also senkrecht zur Flachseite 66, kontaktieren lässt.

Fig. 17 zeigt die Leiterplatte 18, 25 mit dem daran angebrachten Steckkontaktträger 67 und dem dran angebrachten Steckkontakt 71 in einer schematischen Seitenansicht. Es ist zu erkennen, dass die Steckkontaktaufnahme 75 des Steckkontakts 71 in diesem Ausführungsbeispiel über die Stirnfläche 31 hervorsteht. Dies ermöglicht einen besonders einfachen Aufbau der Leiterplatte 18, 25. Zudem ist erkennbar, dass der Steckkontakt 71 in Nachbarschaft zu seinem Basisteil 72 eine in Längsrichtung des Schlitzes 70 des Steckkontaktträgers 67 nach außen überstehende Schultern 76 und 77 (siehe Fig. 19) aufweist. Die Schulter 76 liegt an einer Unterseite des Trägerbereichs 69 an und bildet mit dem Schlitz 70 einen Hinterschnitt. Aus Fig. 17 geht auch anschaulich hervor, dass zwischen der Flachseite 66 der Leiterplatte 18, 25 und der geöffneten Steckkontaktaufnahme 75 ein Winkel von 90° eingeschlossen ist. Somit ermöglicht die Anordnung des Steckkontakts 71 am Steckkontaktträger 67 eine stirnseitige Kontaktierung der Leiterplatte 18, 25.

In Fig. 18 ist die Leiterplatte 18, 25 mit dem daran angebrachten Steckkontaktträger 67 und dem dran angebrachten Steckkontakt 71 in einer schematischen Draufsicht dargestellt. Es ist zu erkennen, dass der Steckkontaktträger 67 in diesem Ausführungsbeispiel genau drei Durchsteckkontakte 68 aufweist, die sich in Dickenrichtung der Leiterplatte 18, 25 durch diese hindurch erstrecken. Zudem ist hier nochmals genauer zu erkennen, dass die Steckkontaktaufnahme 75 parallel zu der Stirnfläche 31 geöffnet ist.

In Fig. 19, die den Steckkontaktträger 67 mit dem daran angebrachten Steckkontakt 71 in einer Vorderansicht ohne die Leiterplatte 18, 25 zeigt, ist zu erkennen, dass der Steckkontakt 71 in Nachbarschaft zu seinem Basisteil 72 die zwei nach außen vorstehenden Schultern 76, 77 aufweist. Die Schultern 76, 77 bilden mit der hier Unterseite des Trägerbereichs 69 einen Hinterschnitt, so dass der Steckkontakt 71 gegen eine Bewegung nach hier oben gesichert ist. Gegebenenfalls ist der Steckkontakt 71 an dieser Stelle mit dem Steckkontaktträger 67 stoffschlüssig verbunden, zum Beispiel durch Ultraschallschweißen, Löten oder ähnlichem.

Fig. 20 zeigt den Steckkontaktträger 67 mit dem daran angebrachten Steckkontakt 71 in einer Draufsicht, ebenfalls ohne die Leiterplatte 18, 25. Hier sind nochmals die Durchsteckkontakte 68 des Steckkontakts 71 zu erkennen, die hier Einführschrägen aufweisen, um die Bestückung der Leiterplatte einfacher zu gestalten. Im Trägerbereich 69 ist der Steckkontakt 71 angebracht.

Fig. 21 zeigt eine beispielhafte Anwendung der Leiterplatte 18, 25 mit daran angebrachten Steckkontaktträgern 67 und Steckkontakten 71. Hier ist ein elektrischer Stromverteiler 1 für ein Fahrzeug mit der darin angeordneten Leiterplatte 18, 25 und einer Stromschiene 4 in einer Draufsicht dargestellt. Die Stromschiene 4 ist parallel zu der Leiterplatte 18, 25 angeordnet. Die Leiterplatte 18, 25 dient hier dem Schalten eines Laststroms von bis zu 150 A für einen (nicht gezeigten) elektrischen Verbraucher des Fahrzeugs. Die Einspeisung des zu schaltenden Laststroms erfolgt über die Stromschiene 4. Von der Leiterplatte 18, 25 erfolgt dann die Versorgung der (nicht gezeigten) elektrischen Verbraucher. Zudem geht aus Fig. 21 hervor, dass eine elektrische Sicherung 23' mit einem ersten Kontaktfuß 12 in einer Steckrichtung R in ein Kontaktelement 16 der Stromschiene 4 eingesteckt ist. Ein zweiter Kontaktfuß 13 der elektrischen Sicherung 23' ist in einen der Steckkontakte 71 der Leiterplatte 18, 25, von denen hier insgesamt drei vorgesehen sind, eingesteckt.

Ausgehend von dem dargestellten Ausführungsbeispiel lässt sich die erfindungsgemäße Leiterplatte 18, 25 in vielerlei Hinsicht abwandeln. So ist es beispielsweise möglich, dass die Leiterplatte 18, 25 eine Ausklinkung aufweist, die sich parallel zur Steckkontaktaufnahme 75 von der Stirnfläche 31 her nach innen erstreckt. Damit lassen sich der der Steckkontaktträger 67 und der daran angebrachte Steckkontakt 71 von der Stirnfläche 31 nach innen versetzt anordnen und sind damit besser vor mechanischen Einflüssen geschützt. Es ist auch möglich, dass die Durchsteckkontakte 68 aus Richtung der Stirnfläche 31 betrachtet zweireihig ausgeführt sind, damit auf den Steckkontakt 71 wirkende Steck- und Ziehkräfte besser in die Leiterplatte 18, 25 eingeleitet werden können.

Fig. 22 zeigt in einer perspektivischen Draufsicht eine erfindungsgemäße Stromversorgungseinrichtung 1 für ein Fahrzeug, die hier in Form eines Stromverteilers ausgeführt ist. Die Stromversorgungseinrichtung 1 dient der Versorgung von einer Vielzahl von elektrischen Verbrauchern des Fahrzeugs.

Die Stromversorgungseinrichtung 1 weist ein oder mehrere Relais 11 auf, von denen hier exemplarisch nur ein einziges gezeigt ist. Das Relais 11 ist als Steckrelais ausgeführt und weist an seiner Unterseite ein Paar, also zwei Steuerkontakte 14 und 15 zum Führen eines Steuerstroms sowie ein Paar, also zwei Lastkontakte 12 und 13 zum Führen eines von dem Relais 11 zu schaltenden Laststroms auf. Sowohl die Steuerkontakte 14 und 15 als auch die Lastkontakte 12 und 13 sind als steckbare Kontaktfüße ausgebildet. In diesem Ausführungsbeispiel stehen die beiden fußförmigen Lastkontakte 12, 13 senkrecht zu den beiden fußförmigen Steuerkontakten 14, 15. Ein solches Relais 11 ist in verschiedenen Ausführungsformen sowie zum Schalten unterschiedliche Lastströme als Zukaufteil erhältlich. Der Steuerstrom zum Ansteuern des Relais 11 beträgt größenmäßig etwa 75 mA bis 0,1 A, der schaltbare Laststrom darf je nach Ausführung des Relais 11 zum Beispiel 30 A bis 50 A oder mehr betragen.

Des Weiteren umfasst die Stromversorgungseinrichtung 1 eine Leiterplatte 18, 25, die hier eine Mehrzahl von paarweise angeordneten Steuerkontaktelementen 8 und 9 aufweist.

Die Steuerkontaktelemente 8 sind als Gabelkontaktelemente mit einer Steuerkontaktaufnahme ausgebildet, in die die Steuerkontakte 14, 15 des Relais 11 einsteckbar sind. Die Steuerkontaktelemente 8, 9 sind über eine (nicht dargestellte) Vielzahl von Leiterbahnen mit einem Steckkontakt 80 für einen (nicht dargestellten) Elektronikaufsatz elektrisch verbunden. Mit dem auf den Steckkontakt 80 aufsteckbaren Elektronikaufsatz wird der Steuerstrom, der zum Ansteuern des Relais 11 über die Steckkontaktelemente 8, 9 auf die Steuerkontakte 14, 15 zu führen ist, elektronisch gesteuert. Die Leiterbahnen sind so dimensioniert, dass deren Stromtragfähigkeit in etwa dem Betrag des Steuerstroms entspricht.

Die Stromversorgungseinrichtung 1 weist ferner einen ersten Laststromleiter 4, der hier als Stromschiene 4 ausgeführt ist und in Fig. 22 parallel zu der Leiterplatte 18, 25 angeordnet ist.

Darüber hinaus ist ein zweiter Laststromleiter 8 vorgesehen, der hier ebenfalls als Stromschiene ausgeführt ist und in Fig. 22 im Wesentlichen senkrecht zur Leiterplatte 18, 25 angeordnet ist. Der stromschienenförmige, erste Laststromleiter 4 dient als Versorgungsstromschiene und verfügt über ein erstes Lastkontaktelement 16, über das der zu schaltende Laststrom auf den Lastkontakt 12 des Relais 11 und in dieses hinein leitbar ist. Der erste Laststromleiter 4 ist zur Versorgung zum Beispiel über ein (nicht gezeigtes) Batteriekabel mit einem (ebenfalls nicht gezeigten) Pluspol einer Fahrzeugbatterie elektrisch verbunden. Der stromschienenförmige, zweite Laststromleiter 8 dient als Laststromschiene, von der die Verbraucher des Fahrzeugs mit dem Laststrom versorgt werden, und verfügt über ein zweites Lastkontaktelement 17 zum Leiten des Laststroms vom Lastkontakt 13 des Relais 11 in den zweiten Laststromleiter 8. Der Laststrom wird also durchgängig außerhalb der Leiterplatte 18, 25 geführt, so dass deren (nicht dargestellten) Leiterbahnen nicht für den Laststrom dimensioniert werden müssen.

Dadurch lässt sich die Leiterplatte 18, 25 mit vergleichsweise wenig Leiterbahnmaterial und damit kostengünstig bereitstellen.

Das erste und zweite Lastkontaktelement 16, 17 sind jeweils als paketierbare Lamellenkontakte mit gabelförmiger Steckaufnahme für die Lastkontakte 12, 13 des Relais 11 ausgeführt. Je nach Betrag des Laststroms enthält das Paket der Lastkontaktelemente 16, 17 mehr oder weniger Lamellen. Die Lastkontakte 12, 13 sind in Stanzlöcher der Laststromleiter 4, 8 eingesteckt und gegebenenfalls verlötet. In Fig. 22 ist exemplarisch jeweils nur ein einziges Lastkontaktelement 16, 17 gezeigt, wobei die Laststromleiter 4, 8 üblicherweise aber je Steuerkontaktelement-Paar 8, 9 ein Lastkontaktelement 16, 17 aufweisen. Die Lastkontaktelemente 16, 17 sind senkrecht zu den Steuerkontaktelementen 8, 9 angeordnet, so dass deren Ausrichtung der Ausrichtung der Lastkontakte 12, 13 zu den Steuerkontakten 14, 15 des Relais 11 entspricht.

Fig. 23 zeigt in einer Draufsicht die Stromversorgungseinrichtung 1 aus Fig. 22 als Stromverteiler. Es ist erkennbar, dass der erste stromschienenförmige Laststromleiter 4 gemeinsam mit der dazu parallel angeordneten Leiterplatte 18, 25 in einem aus einem Kunststoff gefertigten Basismodulgehäuse 3 untergebracht ist. In diesem Ausführungsbeispiel sind auf der Leiterplatte 18, 25 drei Paar Steuerkontaktelemente 8, 9 angeordnet. Dementsprechend sind auf dem ersten Laststromleiter 4 drei erste Lastkontaktelemente 16 angeordnet, wodurch drei Relais 11 ansteuerbar sind. Zur besseren Illustration ist hier jedoch nur ein einziges Relais 11 dargestellt, wobei dessen Steuerkontakte 14, 15 und Lastkontakte 12, 13 (weil vom Relaisgehäuse verdeckt) als gestrichelte Linien dargestellt sind.

Aus Fig. 23 geht weiter hervor, dass der zweite stromschienenförmige Laststromleiter 8 in einem aus Kunststoff gefertigten Universalmodulgehäuse 7 untergebracht ist. Wie in Fig. 22, ist der zweite Laststromleiter 8 auch hier senkrecht zur Leiterplatte 18, 25 und dem ersten Laststromleiter 4 angeordnet. Es ist erkennbar, dass für jedes Steuerkontaktelement-Paar 8, 9 der Leiterplatte 18, 25 ein Universalmodulgehäuse 7 mit darin aufgenommenem zweiten Laststromleiter 8 vorgesehen ist. Wie oben bereits erwähnt, sind zur besseren Illustration aber nicht sämtliche vorgesehenen Relais 11 dargestellt. Des Weiteren geht aus Fig. 23 hervor, dass der zweite Laststromleiter 8 eine Mehrzahl von Steckkontakten 81 aufweist, in die (nicht dargestellte) Stecksicherungen zur Absicherung der zu versorgenden elektrischen Verbraucher einsteckbar sind.

Da der erste Laststromleiter 4 den gesamten Laststrom, der über die mehreren Relais 11 den mehreren zweiten Laststromleitern 8 zugeführt wird, führen muss, ist der erste Laststromleiter 4 für eine höhere Stromtragfähigkeit dimensioniert als die zweiten Lastromleiter 8. Dies lässt sich durch Anpassung des Leiterquerschnitts, also Schienendicke und/oder Schienenbreite, des Laststromleiters 8 bewerkstelligen.

In Fig. 24 ist eine vorteilhafte Ausgestaltung der hier länglich ausgeformten Leiterplatte 18, 25 dargestellt. Es ist erkennbar, dass die Leiterplatte 18, 25 seitlich zu den Steuerkontaktelement-Paaren 8, 9 (also an den Breitseiten der Leiterplatte 18, 25) beidseitig jeweils eine Ausklinkung 82 und 83 in Form von Materialaussparungen aufweist. So lässt sich die Breite der Leiterplatte 18, 25 abschnittsweise reduzieren, um bei auf den Steuerkontaktelementen 8, 9 aufgestecktem Relais 11 sowohl auch dessen Lastkontakte 12, 13 direkt kontaktieren zu können.

Die Ausklinkungen 82, 83 sind so bemessen, dass im Bereich der Ausklinkungen 82, 83 ein Abstand zwischen den Steuerkontaktelementen 8,9 und einer Außenkante der Leiterplatte 18, 25 kleiner ist als ein Abstand zwischen einem der Steuerkontakte 14, 15 und einem der Lastkontakte 12, 13 des Relais 11. Diese Ausführungsvariante eignet sich besonders zur Direktkontaktierung der Lastkontakte 12, 13 des Relais 11 durch als biegeschlaffe elektrische Leitung ausgeführte Laststromleiter 4, 8. Dabei sind im kontaktieren Zustand die Lastkontakte 12, 13 und/oder Steckkontakte der Laststromleiter 4, 8 seitlich zu der Leiterplatte 18, 25 im Bereich der Ausklinkungen 82, 19 angeordnet. Alternativ dazu ist es möglich, dass die Ausklinkungen 82, 83 (in Längsrichtung der Leiterplatte) so breit ausgeführt sind, dass auch ein stromschienenförmiger Laststromleiter 4, 8 darin aufgenommen werden kann.

Ausgehend von dem dargestellten Ausführungsbeispiel kann die erfindungsgemäße Stromversorgungseinrichtung 1 in vielerlei Hinsicht abgewandelt werden. Beispielsweise ist es möglich, dass nur einer der Laststromleiter 4, 8 als Stromschiene ausgebildet ist, nämlich idealerweise der zur Versorgung dienende erste Laststromleiter 4. Dagegen kann der andere, zweite Laststromleiter 8 als biegeschlaffe elektrische Leitung ausgeführt sein.

Fig. 25 zeigt einen Ablaufplan eines Verfahrens zur Diagnose eines Zustands, insbesondere Schaltzustands, eines elektromechanischen Bauelements (11, 23) eines Stromverteilers (1) in einem Stromverteilergehäuse, das wenigstens einen durch eine Fußelement gebildeten Lastkontakt (12, 13) zum Führen eines elektrischen Laststroms aufweist, mit den Schritten:
Abgreifen des Laststroms an dem Lastkontakt (12, 13) durch ein gestecktes erstes Gegenkontaktelement (17),
Abgreifen einer elektrischen Spannung an demselben Lastkontakt (12, 13) durch ein gestecktes zweites Gegenkontaktelement (26), das an einer Leiterplatte (18, 25) als ein Trägerelement angebracht ist,
Weiterführen des abgegriffenen Stroms über einen elektrischen Leiter (13),
Verarbeiten und/oder Auswerten der abgegriffenen Spannung zum Überprüfen des Zustands, insbesondere Schaltzustands, des elektromechanischen Bauelements (11, 23).

### BEZUGSZEICHENLISTE

- 1: elektrische Stromverteilung, Stromverteiler, Stromversorgungseinrichtung
- 2: Basismodul
- 3: Basismodulgehäuse
- 4: erste Stromschiene
- 5: Stromversorgungseinrichtung (z.B. Fahrzeugbatterie)
- 6: Universalmodul, Erweiterungsmodul(e)
- 7: Universalmodulgehäuse
- 8: zweite Stromschiene, erstes Trägerelement
- 9: Halteteil
- 10: Halteteil
- 11: Relais (z.B. Steckrelais), elektromechanisches Bauelement
- 12: erster Lastkontakt, Lastkontaktfuß
- 13: zweiter Lastkontakt, Lastkontaktfuß
- 14: (erster) Steuerkontakt, Steuerkontaktfuß
- 15: (zweiter) Steuerkontakt, Steuerkontaktfuß
- 16: erstes Lastkontaktelement (z.B. gabelförmiger Lamellenkontakt), Gabelkontakt
- 17: zweites Lastkontaktelement (z.B. gabelförmiger Lamellenkontakt), Gabelkontakt, erstes Gegenkontaktelement
- 18: Leiterplatte
- 19: Steuerkontaktelement (z.B. gabelförmiger Steckkontakt, Gabelkontakt)
- 20: Steuerkontaktelement (z.B. gabelförmiger Steckkontakt, Gabelkontakt)
- 21: Steckkontakt
- 22: Mehrzahl von Steckkontakten

- 23: Stecksicherung, Schmelzsicherung
- 23': elektrische Sicherung
- 24: Schmelzabschnitt

- 25: zweites Trägerelement, Leiterplatte
- 26: zweites Gegenkontaktelement, Gabelkontakt
- 27: Messeinrichtung
- 28: Auswerteeinrichtung

- 30: (erste) Stirnseite
- 31: (erste) Stirnfläche
- 32: Flachseite
- 33: Mehrzahl von Kontaktfüßen (z.B. Durchsteckfüße)
- 34: Abstützfuß
- 35: Steckkontaktaufnahme
- 36: Kontaktfeder
- 37: Kontaktfeder
- 38: Schlitz(e), Ausklinkung
- 39: Abstützfuß
- 40: Abstützfuß
- 41: Lötstelle(n)
- 42: Klemmschenkel
- 43: Klemmschenkel
- 44: Lötfläche
- 45: Lötfläche

- 50: erste Ausklinkungsfläche
- 51: zweite Ausklinkungsfläche
- 52: dritte Ausklinkungsfläche
- 53: Steckkontakt
- 54: Basisteil
- 55: erster Federarm
- 56: zweiter Federarm
- 57: erster Kontaktarm
- 58: zweiter Kontaktarm
- 59: dritter Kontaktarm
- 60: erster Lötpin
- 61: zweiter Lötpin
- 62: dritter Lötpin

- 65: zweite Stirnseite
- 66: Flachseite
- 67: Steckkontaktträger
- 68: Durchsteckkontakt(e)
- 69: Trägerbereich
- 70: Schlitz
- 71: Steckkontakt
- 72: Basisteil
- 73: Federarm
- 74: Federarm
- 75: Steckkontaktaufnahme
- 76: Schulter
- 77: Schulter

- d: Abstand zwischen erster und zweiter Stromschiene
- R: Einsteckrichtung

- 80: Steuerkontakt
- 81: Mehrzahl von (Sicherungs-)Steckkontakten
- 82: Ausklinkung (z.B. Materialaussparung)
- 83: Ausklinkung (z.B. Materialaussparung)

## Patentansprüche

1. Elektrischer Stromverteiler (1) für ein Fahrzeug, mit
- einem Basismodul (2), in dem zumindest eine erste Stromschiene (4) angeordnet ist, die mit einer Stromversorgungseinrichtung (5) des Fahrzeugs elektrisch verbunden oder verbindbar ist, und
- wenigstens einem in Nachbarschaft zum Basismodul (2) angeordneten Universalmodul (6), in dem eine zweite Stromschiene (8) angeordnet ist,
wobei,
ein elektromechanisches Bauelement (11) und/oder eine Stecksicherung (23) zum Schalten eines in die erste Stromschiene (4) eingespeisten elektrischen Stroms mit einem ersten Lastkontakt (12) die erste Stromschiene (4) und mit einem zweiten Lastkontakt (13) die zweite Stromschiene (8) kontaktiert,
**dadurch gekennzeichnet, dass**
zwischen der ersten Stromschiene (4) und der zweiten Stromschiene (8) eine Leiterplatte (18) mit Steuerkontaktelementen (19, 20) zum Kontaktieren von Steuerkontakten (14, 15) des Bauelements (11) angeordnet ist, wobei
- ein den Lastkontakt (12, 13) steckend kontaktierendes, erstes Gegenkontaktelement (17), und
- ein den Lastkontakt (12, 13) gleichzeitig steckend kontaktierendes, zweites Gegenkontaktelement (26), das an der Leiterplatte (18, 25) als ein Trägerelement angebracht ist, angeordnet sind,
wobei das erste und zweite Gegenkontaktelement (17, 26) auf getrennten Trägerelementen (8, 18, 25) angeordnet sind, und das erste Gegenkontaktelement (17) für einen Stromabgriff zum Weiterführen des Laststroms und das zweite Gegenkontaktelement (26) für einen Spannungsabgriff zum Überprüfen eines Zustands, insbesondere Schaltzustands, des elektromechanischen Bauelements (11, 23) eingerichtet sind.

2. Stromverteiler (1) nach Anspruch 1, **dadurch gekennzeichnet, dass** das elektromechanische Bauelement (11) ein Steckrelais mit fußförmigen Lastkontakten (12, 13) ist.

3. Stromverteiler (1) nach Anspruch 1 oder 2, **dadurch gekennzeichnet, dass** die erste und/oder die zweite Stromschiene (4, 8) wenigstens ein Lastkontaktelement (16, 17) zur Aufnahme des Lastkontakts (12, 13) des Relais (11) und/oder der Stecksicherung (23) aufweist.

4. Stromverteiler (1) nach Anspruch 3, **dadurch gekennzeichnet, dass** das Lastkontaktelement (16, 17) als, vorzugsweise paketierbarer, lamellenförmiger, Steckkontakt ausgebildet ist.

5. Stromverteiler (1) nach einem der vorhergehenden Ansprüche, **dadurch gekennzeichnet, dass** eine Flachseite der Leiterplatte (18) im Wesentlichen senkrecht zu den Flachseiten der Stromschienen (4, 8) angeordnet ist.

6. Stromverteiler (1) nach einem der vorhergehenden Ansprüche, **dadurch gekennzeichnet, dass** auf der Leiterplatte (18, 25) eine Messeinrichtung (27) zum Verarbeiten der abgegriffenen elektrischen Spannung angeordnet ist und/oder auf der Leiterplatte (18, 25) eine Auswerteeinrichtung (28) zum Auswerten der verarbeiteten elektrischen Spannung angeordnet ist.

7. Stromverteiler (1) nach einem der vorhergehenden Ansprüche, **dadurch gekennzeichnet, dass** die Leiterplatte (18, 25) ferner ein Steuerkontaktelement zum Kontaktieren eines Steuerkontakts des Bauelements (11, 23) aufweist.

8. Stromverteiler (1) nach Anspruch 7, **dadurch gekennzeichnet, dass** auf der Leiterplatte (18, 25) eine Steuereinrichtung zum Ansteuern des Bauelements (11, 23) für den zu überprüfenden Zustand angeordnet ist.

9. Stromverteiler (1) nach einem der vorhergehenden Ansprüche, bei dem der wenigstens eine Gabelkontakt (17, 26), der eine gabelförmige Steckkontaktaufnahme (35) zum Einstecken eines Steckkontakts (14, 15) aufweist und die Leiterplatte (18, 25) an wenigstens einer Flachseite (32) elektrisch kontaktiert,
zumindest abschnittsweise parallel zu der Flachseite (32) der Leiterplatte (18, 25) ausgerichtet und in Nachbarschaft einer Stirnseite (30) der Leiterplatte (18, 25) angeordnet ist, wobei die Steckkontaktaufnahme (35) parallel zur Stirnseite (30) oder zu dieser hin geöffnet ist.

10. Stromverteiler (1) nach Anspruch 9, **dadurch gekennzeichnet, dass** zwei die Steckkontaktaufnahme (35) ausbildende Kontaktfedern (36, 37) in einer Richtung parallel zur Längserstreckung der Stirnseite (30) aufeinander zugespannt sind und/oder dass die Steckkontaktaufnahme (35) hinter der Stirnseite (30) oder im Wesentlichen bündig damit abschließt und/oder die Steckkontaktaufnahme (35) über die Stirnseite (30) hervorsteht.

11. Stromverteiler (1) nach einem der Ansprüche 9 oder 10, **dadurch gekennzeichnet, dass** die Leiterplatte (18, 25) eine sich von der Stirnseite (30) im Wesentlichen senkrecht nach innen erstreckende, vorzugsweise schlitzförmige, Ausklinkung (38) aufweist.

12. Stromverteiler (18, 25) nach Anspruch 11, bei dem die darin angeordnete Leiterplatte (18, 25) hochkant ausgerichtet ist, mit
- wenigstens einem in der Ausklinkung (38) angeordneten, elektrischen Steckkontakt (53) zur Aufnahme eines elektrischen Gegensteckkontakts (11,23),
- wobei sich der Steckkontakt (53) zum Aufbringen einer Kontaktkraft auf den Gegenkontakt (11, 23) an wenigstens einer zu einer Stirnfläche (31) der Leiterplatte (18, 25) im Wesentlichen senkrecht ausgerichteten Ausklinkungsfläche (51, 52) mit wenigstens einem Federarm (55, 56) abstützt.

13. Stromverteiler (1) nach Anspruch 12, **dadurch gekennzeichnet, dass** der Steckkontakt (53) U-förmig mit zwei aufeinander zugespannten Federarmen (55, 56) und einem diese verbindenden Basisteil (54) ausgebildet ist, wobei sich das Basisteil (54) an einer parallel zu der Stirnfläche (31) ausgerichteten Ausklinkungsfläche (50) abstützt, oder dass der wenigstens eine Federarm (55, 56) dadurch gebildet ist, dass ein sich zu der Stirnfläche (31) hin erstreckendes Ende des Steckkontakts nach außen gebogen ist und sich an der Ausklinkungsfläche (51, 52) abstützt.

14. Stromverteiler (1) nach einem der Ansprüche 12 oder 13, **dadurch gekennzeichnet, dass** der Steckkontakt (53) wenigstens einen Kontaktarm (57, 58, 59) aufweist, der sich über die wenigstens eine Ausklinkungsfläche (50, 51, 52) hinweg erstreckt und eine Flachseite der Leiterplatte (18, 25) elektrisch kontaktiert, insbesondere wobei die Leiterplatte (18, 25) drei Ausklinkungsflächen (50, 51, 52) aufweist, über die sich je wenigstens ein Kontaktarm (57, 58, 59) hinweg erstreckt.

15. Stromverteiler (1) nach einem der Ansprüche 12 bis 14, **dadurch gekennzeichnet, dass** eine Breite des Steckkontakts (53) in Dickenrichtung der Leiterplatte (18, 25) kleiner ist als eine Dicke der Leiterplatte (18, 25).

16. Stromverteiler (1) nach einem der Ansprüche 9 bis 15, **dadurch gekennzeichnet, dass** der Gabelkontakt (17, 26) derart gekröpft ist, dass die Steckkontaktaufnahme (35) von der Flachseite (32) der Leiterplatte (18, 25) beabstandet ist.

17. Stromverteiler (1) nach einem der Ansprüche 9 bis 16, **dadurch gekennzeichnet, dass** der Gabelkontakt (17, 26) eine Mehrzahl von Durchsteckfüßen (33) aufweist, die in oder durch eine Flachseite (32) der Leiterplatte (18, 25) gesteckt sind, und/oder dass der Gabelkontakt (17, 26) zwei Klemmschenkel (42, 43) aufweist, zwischen denen die Leiterplatte (18, 25) eingeklemmt ist, insbesondere wobei Klemmschenkel (42, 43) an Lötflächen (44, 45) der Leiterplatte (18, 25) oberflächenmontiert sind.

18. Stromverteiler (1) nach einem der vorhergehenden Ansprüche, mit wenigstens einem durch eine Mehrzahl von paketierten, blechförmigen Kontaktlamellen gebildeten, elektrischen Steckkontakt (71) mit einer gabelförmigen Steckkontaktaufnahme (75),
**wobei** wenigstens einen Steckkontaktträger (67), der in eine Flachseite (66) der Leiterplatte (18, 25) elektrisch kontaktierend gesteckt ist und den Steckkontakt (71) an einem parallel zu einer Stirnfläche (31) der Leiterplatte (18, 25) ausgerichteten Trägerbereich (69) elektrisch kontaktierend derart trägt, dass die Steckkontaktaufnahme (75) des Steckkontakts (71) zu einer Stirnseite (30, 65) der Leiterplatte (18, 25) hin oder parallel zu dieser geöffnet ist.

19. Stromverteiler (1) nach Anspruch 18, **dadurch gekennzeichnet, dass** der Steckkontaktträger (67) eine Mehrzahl von Durchsteckkontakten (68) aufweist, die im Wesentlichen senkrecht zu dem an dem Trägerbereich (69) angeordneten Steckkontakt (71) ausgerichtet sind, insbesondere wobei der Steckkontaktträger (67) mittels Durchsteckmontage mit der Leiterplatte (18, 25) verlötet ist.

20. Stromverteiler (1) nach einem der Ansprüche 18 oder 19, **dadurch gekennzeichnet, dass** der Trägerbereich (69) des Steckkontaktträgers (67) einen Schlitz (70) aufweist, durch den der Steckkontakt (71) hindurch gesteckt ist.

21. Stromverteiler (1) nach einem der vorhergehenden Ansprüche, **dadurch gekennzeichnet, dass** die erste und zweite Stromschiene (4) im Wesentlichen senkrecht und/oder parallel zueinander angeordnet sind.

22. Stromverteiler (1) nach einem der vorhergehenden Ansprüche, **dadurch gekennzeichnet, dass** die zweite Stromschiene (8) eine Mehrzahl von Steckplätzen (22) zur Aufnahme von elektrischen Sicherungen aufweist, wobei der über das elektromechanische Bauteil (11) geschaltete und/oder die Stecksicherung (23) geführte Strom über die Sicherungen zu elektrischen Verbrauchern des Fahrzeugs führbar ist, insbesondere wobei an dem Basismodul (2) eine Mehrzahl von Universalmodulen (6) angebunden ist, deren zweite Stromschiene (8) über das jeweils wenigstens eine Relais (11) und/oder die jeweils wenigstens eine Stecksicherung (23) mit der ersten Stromschiene (4) elektrisch verbunden ist.

23. Verfahren zur Diagnose eines Zustands, insbesondere Schaltzustands, eines elektromechanischen Bauelements (11, 23) eines Stromverteilers (1) in einem Stromverteilergehäuse, das wenigstens einen durch eine Fußelement gebildeten Lastkontakt (12, 13) zum Führen eines elektrischen Laststroms aufweist, mit den Schritten:
- Abgreifen des Laststroms an dem Lastkontakt (12, 13) durch ein gestecktes erstes Gegenkontaktelement (17),
- Abgreifen einer elektrischen Spannung an demselben Lastkontakt (12, 13) durch ein gestecktes zweites Gegenkontaktelement (26), das an einer Leiterplatte (18, 25) als ein Trägerelement angebracht ist,
- Weiterführen des abgegriffenen Stroms über einen elektrischen Leiter (13),
- Verarbeiten und/oder Auswerten der abgegriffenen Spannung zum Überprüfen des Zustands, insbesondere Schaltzustands, des elektromechanischen Bauelements (11, 23).

## Claims

1. Electrical power distributor (1) for a vehicle, comprising
- a base module (2) in which at least one first busbar (4) is arranged, which busbar is or can be electrically connected to a power supply device (5) of the vehicle, and
- at least one universal module (6) which is arranged in the vicinity of the base module (2) and in which a second busbar (8) is arranged,
wherein
an electromechanical component (11) and/or a plug-in fuse (23) for switching an electric current which makes contact with the first busbar (4) by way of a first load contact (12) and with the second busbar (8) by way of a second load contact (13),
**characterized in that**
a printed circuit board (18) comprising control contact elements (19, 20) for making contact with control contacts (14, 15) of the component (11) is arranged between the first busbar (4) and the second busbar (8), wherein
- a first mating contact element (17) which makes plug-in contact with the load contact (12, 13), and
- a second mating contact element (26) which simultaneously makes plug-in contact with the load contact (12, 13) and is fitted on the printed circuit board (18, 25) as a support element
are provided,
wherein the first and the second mating contact element (17, 26) are arranged on separate support elements (8, 18, 25), and the first mating contact element (17) is designed for current tapping for the purpose of passing on the load current, and the second mating contact element (26) is designed for voltage tapping for the purpose of checking a state, in particular a switching state, of the electromechanical component (11, 23).

2. Power distributor (1) according to Claim 1, **characterized in that** the electromechanical component (11) is a plug-in relay with foot-like load contacts (12, 13) .

3. Power distributor (1) according to Claim 1 or 2, **characterized in that** the first and/or the second busbar (4, 8) have/has at least one load contact element (16, 17) for receiving the load contact (12, 13) of the relay (11) and/or of the plug-in fuse (23).

4. Power distributor (1) according to Claim 3, **characterized in that** the load contact element (16, 17) is designed as a, preferably packetizable, lamella-like plug-in contact.

5. Power distributor (1) according to one of the preceding claims, **characterized in that** a flat side of the printed circuit board (18) is arranged substantially perpendicularly in relation to the flat sides of the busbars (4, 8).

6. Power distributor (1) according to one of the preceding claims, **characterized in that** a measuring device (27) for processing the tapped-off electrical voltage is arranged on the printed circuit board (18, 25) and/or an evaluation device (28) for evaluating the processed electrical voltage is arranged on the printed circuit board (18, 25).

7. Power distributor (1) according to one of the preceding claims, **characterized in that** the printed circuit board (18, 25) further has a control contact element for making contact with a control contact of the component (11, 23).

8. Power distributor (1) according to Claim 7, **characterized in that** a control device for actuating the component (11, 23) for the state to be checked is arranged on the printed circuit board (18, 25).

9. Power distributor (1) according to one of the preceding claims, in which the at least one fork contact (17, 26), which has a fork-like plug-in contact receptacle (35) for inserting a plug-in contact (14, 15), and makes electrical contact with the printed circuit board (18, 25) on at least one flat side (32),
is oriented parallel in relation to the flat side (32) of the printed circuit board (18, 25) at least in sections and is arranged in the vicinity of an end side (30) of the printed circuit board (18, 25), wherein the plug-in contact receptacle (35) is parallel in relation to the end side (30) or open in the direction of the said end side.

10. Power distributor (1) according to Claim 9, **characterized in that** two contact springs (36, 37), which form the plug-in contact receptacle (35), are biased in relation to one another in a direction parallel in relation to the longitudinal extent of the end side (30), and/or **in that** the plug-in contact receptacle (35) terminates behind the end side (30) or substantially flush with the said end side and/or the plug-in contact receptacle (35) protrudes beyond the end side (30).

11. Power distributor (1) according to either of Claims 9 and 10, **characterized in that** the printed circuit board (18, 25) has a, preferably slot-like, notch (38) which extends substantially perpendicularly inwards from the end side (30).

12. Power distributor (18, 25) according to Claim 11, in which the printed circuit board (18, 25) which is arranged therein is oriented upright, comprising
- at least one electrical plug-in contact (53), which is arranged in the notch (38), for receiving an electrical mating plug-in contact (11, 23),
- wherein the plug-in contact (53), for the purpose of applying a contact force on the mating contact (11, 23), is supported on at least one notch face (51, 52), which is oriented substantially perpendicularly in relation to an end face (31) of the printed circuit board (18, 25), by way of at least one spring arm (55, 56).

13. Power distributor (1) according to Claim 12, **characterized in that** the plug-in contact (53) is of U-shaped design with two spring arms (55, 56) which are biased in relation to one another and one base part (54) which connects the said spring arms, wherein the base part (54) is supported on a notch face (50) which is oriented parallel in relation to the end face (31), or **in that** the at least one spring arm (55, 56) is formed in such a way that an end of the plug-in contact, which end extends in the direction of the end face (31), is bent outwards and is supported on the notch face (51, 52) .

14. Power distributor (1) according to either of Claims 12 and 13, **characterized in that** the plug-in contact (53) has at least one contact arm (57, 58, 59) which extends beyond the at least one notch face (50, 51, 52) and makes electrical contact with a flat side of the printed circuit board (18, 25), in particular wherein the printed circuit board (18, 25) has three notch faces (50, 51, 52) beyond which in each case at least one contact arm (57, 58, 59) extends.

15. Power distributor (1) according to one of Claims 12 to 14, **characterized in that** a width of the plug-in contact (53) in the thickness direction of the printed circuit board (18, 25) is smaller than a thickness of the printed circuit board (18, 25).

16. Power distributor (1) according to one of Claims 9 to 15, **characterized in that** the fork contact (17, 26) is bent in such a way that the plug-in contact receptacle (35) is at a distance from the flat side (32) of the printed circuit board (18, 25).

17. Power distributor (1) according to one of Claims 9 to 16, **characterized in that** the fork contact (17, 26) has a plurality of plug-through feet (33) which are plugged into or through a flat side (32) of the printed circuit board (18, 25), and/or **in that** the fork contact (17, 26) has two clamping limbs (42, 43) between which the printed circuit board (18, 25) is clamped, in particular wherein the clamping limbs (42, 43) are surface-mounted on soldering faces (44, 45) of the printed circuit board (18, 25).

18. Power distributor (1) according to one of the preceding claims, comprising at least one electrical plug-in contact (71) which is formed by a plurality of packetized metal sheet-like contact lamellae and has a fork-like plug-in contact receptacle (75),
wherein at least one plug-in contact support (67), which is plugged into a flat side (66) of the printed circuit board (18, 25) in an electrically contact-making manner and supports the plug-in contact (71) in an electrically contact-making manner on a support region (69) which is oriented parallel in relation to an end face (31) of the printed circuit board (18, 25) in such a way that the plug-in contact receptacle (75) of the plug-in contact (71) is open in the direction of an end side (30, 65) of the printed circuit board (18, 25) or parallel in relation to the said end side.

19. Power distributor (1) according to Claim 18, **characterized in that** the plug-in contact support (67) has a plurality of plug-through contacts (68) which are oriented substantially perpendicularly in relation to the plug-in contact (71) which is arranged on the support region (69), in particular wherein the plug-in contact support (67) is soldered to the printed circuit board (18, 25) by means of plug-through mounting.

20. Power distributor (1) according to either of Claims 18 and 19, **characterized in that** the support region (69) of the plug-in contact support (67) has a slot (70) through which the plug-in contact (71) is plugged in.

21. Power distributor (1) according to one of the preceding claims, **characterized in that** the first and the second busbar (4) are arranged substantially perpendicularly and/or parallel in relation to one another.

22. Power distributor (1) according to one of the preceding claims, **characterized in that** the second busbar (8) has a plurality of insertion spaces (22) for receiving electrical fuses, wherein the current which is switched by means of the electromechanical component (11) and/or carried by means of the plug-in fuse (23) can be carried via the fuses to electrical loads of the vehicle, in particular wherein a plurality of universal modules (6) are connected to the base module (2), the second busbar (8) of the said base module being electrically connected to the first busbar (4) by means of the in each case at least one relay (11) and/or the in each case at least one plug-in fuse (23).

23. Method for diagnosing a state, in particular a switching state, of an electromechanical component (11, 23) of a power distributor (1) in a power distributor housing which has at least one load contact (12, 13), which is formed by a foot element, for carrying an electrical load current, comprising the steps of:
- tapping off the load current from the load contact (12, 13) by way of a plugged-in first mating contact element (17),
- tapping off an electrical voltage from the same load contact (12, 13) by way of a plugged-in second mating contact element (26) which is fitted on a printed circuit board (18, 25) as a support element,
- passing on the tapped-off current by means of an electrical conductor (13),
- processing and/or evaluating the tapped-off voltage for the purpose of checking the state, in particular the switching state, of the electromechanical component (11, 23) .

## Revendications

1. Distributeur de courant (1) électrique pour un véhicule, comprenant
- un module de base (2) dans lequel est disposée au moins une première barre-bus (4) qui est reliée ou peut être reliée électriquement à un dispositif d'alimentation électrique (5) du véhicule, et
- au moins un module universel (6) disposé dans le voisinage du module de base (2) et dans lequel est disposée une deuxième barre-bus (8), un composant électromécanique (11) et/ou un fusible à enficher (23) destinés à commuter un courant électrique injecté dans la première barre-bus (4) venant en contact avec un premier contact de charge (12) de la première barre-bus (4) et avec un deuxième contact de charge (13) de la deuxième barre-bus (8),
**caractérisé en ce que**
un circuit imprimé (18) pourvu d'éléments de contact de commande (19, 20) destinés à venir en contact avec des éléments de contact (14, 15) du composant (11) est disposées entre la première barre-bus (4) et la deuxième barre-bus (8),
- un premier élément de contact homologue (17) qui vient en contact par enfichage avec le contact de charge (12, 13) et
- un deuxième élément de contact homologue (26), lequel est monté sur le circuit imprimé (18, 25) en tant qu'élément porteur et vient simultanément en contact par enfichage avec le contact de charge (12, 13), étant disposés,
le premier et le deuxième élément de contact homologue (17, 26) étant disposés sur des éléments porteurs (8, 18, 25) séparés et le premier élément de contact homologue (17) étant conçu pour un prélèvement de courant en vue de continuer le courant de charge et le deuxième élément de contact homologue (26) étant conçu pour un prélèvement de tension en vue de contrôler un état, notamment un état de commutation, du composant électromécanique (11, 23).

2. Distributeur de courant (1) selon la revendication 1, **caractérisé en ce que** le composant électromécanique (11) est un relais à enficher muni de contacts de charge (12, 13) en forme de pattes.

3. Distributeur de courant (1) selon la revendication 1 ou 2, **caractérisé en ce que** la première et/ou la deuxième barre-bus (4, 8) possède au moins un élément de contact de charge (16, 17) destiné à accueillir le contact de charge (12, 13) du relais (11) et/ou du fusible à enficher (23).

4. Distributeur de courant (1) selon la revendication 3, **caractérisé en ce que** l'élément de contact de charge (16, 17) est réalisé sous la forme d'un contact à enficher en forme de lamelle, de préférence pouvant être groupé en paquet.

5. Distributeur de courant (1) selon l'une des revendications précédentes, **caractérisé en ce qu'**un côté plat du circuit imprimé (18) est disposé sensiblement perpendiculairement aux côtés plats des barres-bus (4, 8).

6. Distributeur de courant (1) selon l'une des revendications précédentes, **caractérisé en ce qu'**un dispositif de mesure (27) destiné au traitement de la tension électrique prélevée est disposé sur le circuit imprimé (18, 25) et/ou un dispositif d'interprétation (28) destiné à l'interprétation de la tension électrique traitée est disposé sur le circuit imprimé (18, 25).

7. Distributeur de courant (1) selon l'une des revendications précédentes, **caractérisé en ce que** le circuit imprimé (18, 25) possède en outre un élément de contact de commande destiné à venir en contact avec un contact de commande du composant (11, 23).

8. Distributeur de courant (1) selon la revendication 7, **caractérisé en ce qu'**un dispositif de commande destiné à exciter le composant (11, 23) pour l'état à contrôler est disposé sur le circuit imprimé (18, 25).

9. Distributeur de courant (1) selon l'une des revendications précédentes, dans lequel l'au moins un contact lyre (17, 26), lequel possède un logement de contact à enficher (35) fourchu servant à l'enfichage d'un contact à enficher (14, 15) et vient en contact électrique avec le circuit imprimé (18, 25) au niveau d'au moins un côté plat (32),
est orienté parallèlement au côté plat (32) du circuit imprimé (18, 25) au moins dans certaines portions et dans le voisinage d'un côté frontal (30) du circuit imprimé (18, 25), le logement de contact à enficher (35) étant parallèle au côté frontal (30) ou ouvert en direction de celui-ci.

10. Distributeur de courant (1) selon la revendication 9, **caractérisé en ce que** deux ressorts de contact (36, 37) qui forment le logement de contact à enficher (35) sont serrés en fermeture l'un sur l'autre dans une direction parallèle à la projection longitudinale du côté frontal (30) et/ou **en ce que** le logement de contact à enficher (35) se ferme derrière le côté frontal (30) ou sensiblement à fleur de celui-ci et/ou le logement de contact à enficher (35) fait saillie au-dessus du côté frontal (30).

11. Distributeur de courant (1) selon l'une des revendications 9 ou 10, **caractérisé en ce que** le circuit imprimé (18, 25) possède une entaille (38), de préférence en forme de fente, qui s'étend sensiblement perpendiculairement vers l'intérieur depuis le côté frontal (30).

12. Distributeur de courant (18, 25) selon la revendication 11, dans lequel le circuit imprimé (18, 25) disposé dans celui-ci est orienté de chant, comprenant
- au moins un contact à enficher (53) électrique disposé dans l'entaille (38), destiné à accueillir un contact à enficher homologue (11, 23) électrique,
- le contact à enficher (53), en vue d'appliquer une force de contact sur le contact homologue (11, 23), s'appuyant avec au moins un bras de ressort (55, 56) contre au moins une surface d'entaille (51, 52) orientée sensiblement perpendiculairement par rapport à une surface frontale (31) du circuit imprimé (18, 25).

13. Distributeur de courant (1) selon la revendication 12, **caractérisé en ce que** le contact à enficher (53) est réalisé en forme de U avec deux bras de ressort (55, 56) serrés en fermeture l'un sur l'autre et une partie de base (54) qui relie ceux-ci, la partie de base (54) s'appuyant contre une surface d'entaille (50) orientée parallèlement à la surface frontale (31), ou **en ce que** l'au moins un bras de ressort (55, 56) est configuré de telle sorte qu'une extrémité du contact à enficher qui s'étend vers la surface frontale (31) est coudée vers l'extérieur et s'appuie contre la surface d'entaille (51, 52).

14. Distributeur de courant (1) selon l'une des revendications 12 ou 13, **caractérisé en ce que** le contact à enficher (53) possède au moins un bras de contact (57, 58, 59) qui s'étend sur l'au moins une surface d'entaille (50, 51, 52) et vient en contact électrique avec un côté plat du circuit imprimé (18, 25), le circuit imprimé (18, 25) possédant notamment trois surfaces d'entaille (50, 51, 52) sur lesquelles s'étend respectivement au moins un bras de contact (57, 58, 59).

15. Distributeur de courant (1) selon l'une des revendications 12 à 14, **caractérisé en ce qu'**une largeur du contact à enficher (53) dans le sens de l'épaisseur du circuit imprimé (18, 25) est inférieure à une épaisseur du circuit imprimé (18, 25).

16. Distributeur de courant (1) selon l'une des revendications 9 à 15, **caractérisé en ce que** le contact lyre (17, 26) est coudé de telle sorte que le logement de contact à enficher (35) est espacé du côté plat (32) du circuit imprimé (18, 25).

17. Distributeur de courant (1) selon l'une des revendications 9 à 16, **caractérisé en ce que** le contact lyre (17, 26) possède une pluralité de pattes traversantes (33) qui sont enfichées dans ou à travers un côté plat (32) du circuit imprimé (18, 25) et/ou **en ce que** le contact lyre (17, 26) possède deux branches de serrage (42, 43) entre lesquelles est coincé le circuit imprimé (18, 25), les branches de serrage (42, 43) étant notamment montées en surface au niveau de surfaces de brasage (44, 45) du circuit imprimé (18, 25).

18. Distributeur de courant (1) selon l'une des revendications précédentes, comprenant au moins un contact à enficher (71) électrique, formé par une pluralité de lamelles de contact en forme de tôle groupées en paquet, comprenant un logement de contact à enficher (75) en lyre,
dans lequel au moins un porte-contact à enficher (67), lequel est enfiché dans un côté plat (66) du circuit imprimé (18, 25) avec établissement d'un contact électrique et porte le contact à enficher (71) avec établissement d'un contact électrique au niveau d'une zone d'élément porteur (69) orientée parallèlement à une surface frontale (31) du circuit imprimé (18, 25) de telle sorte que le logement de contact à enficher (75) du contact à enficher (71) est ouvert vers un côté frontal (30, 65) du circuit imprimé (18, 25) ou parallèlement à celui-ci.

19. Distributeur de courant (1) selon la revendication 18, **caractérisé en ce que** le porte-contact à enficher (67) possède une pluralité de contacts traversants (68) qui sont orientés sensiblement perpendiculairement par rapport au contact à enficher (71) disposé au niveau de la zone d'élément porteur (69), le porte-contact à enficher (67) étant notamment fixé par brasage au circuit imprimé (18, 25) au moyen d'un montage traversant.

20. Distributeur de courant (1) selon l'une des revendications 18 ou 19, **caractérisé en ce que** la zone d'élément porteur (69) du porte-contact à enficher (67) possède une fente (70) à travers laquelle est enfiché le contact à enficher (71).

21. Distributeur de courant (1) selon l'une des revendications précédentes, **caractérisé en ce que** la première et la deuxième barre-bus (4) sont disposées sensiblement perpendiculairement et/ou parallèlement l'une par rapport à l'autre.

22. Distributeur de courant (1) selon l'une des revendications précédentes, **caractérisé en ce que** la deuxième barre-bus (8) possède une pluralité d'emplacements d'enfichage (22) destinés à accueillir des fusibles électriques, le courant commuté par le biais du composant électromécanique (11) et/ou conduit par le fusible à enficher (23) pouvant être acheminé par le biais des fusibles vers des récepteurs électriques du véhicule, une pluralité de modules universels (6) étant notamment connectés au module de base (2), dont la deuxième barre-bus (8) est reliée électriquement à la première barre-bus (4) par le biais de l'au moins un relais (11) respectif et/ou l'au moins un fusible à enficher (23) respectif.

23. Procédé de diagnostic d'un état, notamment d'un état de commutation, d'un composant électromécanique (11, 23) d'un distributeur de courant (1) dans un boîtier de distributeur de courant, lequel possède au moins un contact de charge (12, 13) formé par un élément patte destiné à conduire un courant de charge électrique, comprenant les étapes suivantes :
- prélèvement du courant de charge au niveau du contact de charge (12, 13) par un premier élément de contact homologue (17) enfiché,
- prélèvement d'une tension électrique au niveau du même contact de charge (12, 13) par un deuxième élément de contact homologue (26) enfiché, lequel est monté sur un circuit imprimé (18, 25) en tant qu'élément porteur,
- continuation du courant prélevé par le biais d'un conducteur électrique (13),
- traitement et/ou interprétation de la tension prélevée en vue de contrôler l'état, notamment l'état de commutation, du composant électromécanique (11, 23).
